(19) **Europäisches Patentamt**
**European Patent Office**
**Office européen des brevets**

(11) **EP 4 208 764 B1**

(12) **EUROPÄISCHE PATENTSCHRIFT**

(45) Veröffentlichungstag und Bekanntmachung des Hinweises auf die Patenterteilung:
**22.10.2025 Patentblatt 2025/43**

(21) Anmeldenummer: **21745979.1**

(22) Anmeldetag: **15.07.2021**

(51) Internationale Patentklassifikation (IPC):
***G05D 1/00*** *(2024.01)*

(52) Gemeinsame Patentklassifikation (CPC):
**G05D 1/0253; B64U 50/19; G05D 1/0094;**
B64U 10/13; B64U 2101/30; B64U 2201/10;
B64U 2201/20

(86) Internationale Anmeldenummer:
**PCT/EP2021/069819**

(87) Internationale Veröffentlichungsnummer:
**WO 2022/048820 (10.03.2022 Gazette 2022/10)**

(54) **ROBOTER UND VERFAHREN ZU EINER ERMITTLUNG EINER VON EINEM ROBOTER ZURÜCKGELEGTEN STRECKE**

ROBOT AND PROCEDURE FOR DETERMINING A DISTANCE COVERED BY A ROBOT

ROBOT ET PROCÉDURE DE DÉTERMINATION D'UNE DISTANCE COUVERT PAR UN ROBOT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.09.2020 DE 102020211167**

(43) Veröffentlichungstag der Anmeldung:
**12.07.2023 Patentblatt 2023/28**

(73) Patentinhaber: **Robert Bosch GmbH**
**70442 Stuttgart (DE)**

(72) Erfinder: **SABZEVARI, Reza**
**31141 Hildesheim (DE)**

(56) Entgegenhaltungen:
**DE-C1- 19 521 358**

- **DAVIDE SCARAMUZZA: "1-Point-RANSAC Structure from Motion for Vehicle-Mounted Cameras by Exploiting Non-holonomic Constraints", INTERNATIONAL JOURNAL OF COMPUTER VISION, KLUWER ACADEMIC PUBLISHERS, BO, vol. 95, no. 1, 7 April 2011 (2011-04-07), pages 74 - 85, XP019923084, ISSN: 1573-1405, DOI: 10.1007/S11263-011-0441-3**
- **SABZEVARI REZA ET AL: "Multi-body Motion Estimation from Monocular Vehicle-Mounted Cameras", IEEE TRANSACTIONS ON ROBOTICS, IEEE SERVICE CENTER, PISCATAWAY, NJ, US, vol. 32, no. 3, 1 June 2016 (2016-06-01), pages 638 - 651, XP011613499, ISSN: 1552-3098, [retrieved on 20160603], DOI: 10.1109/TRO.2016.2552548**

**Beschreibung**

Stand der Technik

Es ist bereits ein Roboter mit zumindest zwei angetriebenen Fortbewegungsmitteln, mit einer Erfassungseinheit, wobei die zumindest zwei Fortbewegungsmittel dazu vorgesehen sind, zumindest die Erfassungseinheit um eine Rotationsachse, welche in einer relativ zur Erfassungseinheit festgesetzten Position angeordnet ist, zu drehen, wobei die Erfassungseinheit und die Rotationsachse beabstandet voneinander angeordnet sind, und mit zumindest einer Steuer- und/oder Regeleinheit zu einer Ermittlung einer zurückgelegten Strecke, vorgeschlagen worden (siehe: DAVIDE SCARAMUZZA: "1-Point-RANSAC Structure from Motion for Vehicle-Mounted Cameras by Exploiting Non-holonomic Constraints", INTERNATIONAL JOURNAL OF COMPUTER VISION, KLUWER ACADEMIC PUBLISHERS, BO, Bd. 95, Nr. 1, 7. April 2011 (2011-04-07), Seiten 74-85, XP019923084, ISSN: 1573-1405, DOI: 10.1007/ S11263-011-0441-3).

Offenbarung der Erfindung

Die Erfindung geht aus von einem Roboter, insbesondere einem teilautonomen Roboter, mit zumindest zwei angetriebenen Fortbewegungsmitteln, insbesondere Rädern, mit einer, insbesondere monokularen, Erfassungseinheit, wobei die zumindest zwei Fortbewegungsmittel dazu vorgesehen sind, zumindest die Erfassungseinheit um eine Rotationsachse, welche in einer relativ zur Erfassungseinheit festgesetzten Position angeordnet ist, zu drehen, wobei die Erfassungseinheit und die Rotationsachse beabstandet voneinander angeordnet sind, und mit zumindest einer Steuer- und/oder Regeleinheit zu einer Ermittlung einer zurückgelegten Strecke.

Es wird vorgeschlagen, dass die Steuer- und/oder Regeleinheit dazu eingerichtet ist, in Abhängigkeit von einer Bewegung der Erfassungseinheit um die während der Bewegung feststehende Rotationsachse, insbesondere in einem bekannten Abstand zur Rotationsachse und/oder in einer bekannten Ausrichtung relativ zur Rotationsachse, einen Distanzumrechnungsparameter zu bestimmen, welcher zur Ermittlung der zurückgelegten Strecke vorgesehen ist.

Unter "eingerichtet" soll insbesondere speziell programmiert, speziell ausgelegt und/oder speziell ausgestattet verstanden werden. Darunter, dass ein Objekt, insbesondere die Steuer- und/oder Regeleinheit, zu einer bestimmten Funktion, insbesondere einer Bestimmung des Distanzumrechnungsparameters, eingerichtet ist, soll insbesondere verstanden werden, dass das Objekt diese bestimmte Funktion in zumindest einem Anwendungs- und/oder Betriebszustand erfüllt und/oder ausführt. Unter einer "Steuer- und/oder Regeleinheit" soll insbesondere eine Einheit mit zumindest einer Steuerelektronik verstanden werden. Unter einer "Steuerelektronik" soll insbesondere eine Einheit mit einer, beispielsweise als Prozessor, als FPGA, als Mikrocontroller o.dgl. ausgebildete, Prozessoreinheit und mit einer, beispielsweise als elektronischer Datenspeicher, als physikalischer Speicher o.dgl. ausgebildete, Speichereinheit sowie mit einem in der Speichereinheit gespeicherten Betriebsprogramm verstanden werden. Vorzugsweise weist die Steuer- und/oder Regeleinheit zumindest einen Algorithmus zur Bestimmung des Distanzumrechnungsparameters und zur Ermittlung der von dem Roboter zurückgelegten Strecke in Abhängigkeit des bestimmten Distanzumrechnungsparameters auf. Insbesondere ist der Algorithmus in der Steuer- und/oder Regeleinheit, insbesondere der Speichereinheit der Steuer- und/oder Regeleinheit, hinterlegt. Darunter, dass die Rotationsachse "während der Bewegung feststehend" ausgebildet ist, soll insbesondere verstanden werden, dass sich der Roboter bei/zu einer Bestimmung des Distanzumrechnungsparameters derart bewegt, dass die Rotationsachse relativ zu einer den Roboter umgebenden Umgebung während der Bewegung zumindest im Wesentlichen stationär bleibt. Insbesondere weist zumindest die Erfassungseinheit bei/zu der Bestimmung des Distanzumrechnungsparameters einen gleichbleibenden, insbesondere bekannten, Abstand zur Rotationsachse auf. Vorzugsweise ist die Erfassungseinheit dazu vorgesehen, bei/zu der Bestimmung des Distanzumrechnungsparameters um die Rotationsachse bewegt zu werden, wobei insbesondere eine Ausrichtung eines Erfassungsbereichs der Erfassungseinheit ebenfalls mitgedreht wird. Unter "vorgesehen" soll insbesondere speziell ausgelegt und/oder speziell ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Vorzugsweise ist die Steuer- und/oder Regeleinheit dazu eingerichtet, insbesondere periodisch oder kontinuierlich, in Abhängigkeit von dem Distanzumrechnungsparameter die von dem Roboter zurückgelegte Strecke zu ermitteln. Besonders bevorzugt ist die Steuer- und/oder Regeleinheit dazu eingerichtet, den Distanzumrechnungsparameter bei einer Kalibrationsbewegung des Roboters, insbesondere während eines regulären Betriebs des Roboters, zu bestimmen und/oder, insbesondere über eine Steuerungs- und/oder Antriebseinheit des Roboters, eine Kalibrationsbewegung zu einer Bestimmung des Distanzumrechnungsparameters zu bewirken.

Unter einem "Distanzumrechnungsparameter" soll insbesondere ein Parameter verstanden werden, welcher zu einer Umrechnung einer in einer beliebigen Einheit erfassten Größe, insbesondere einer Distanz, einem Abstand und/oder einer Entfernung, in eine metrische Einheit, insbesondere Meter, vorgesehen ist. Besonders bevorzugt ist der Distanzumrechnungsparameter dazu vorgesehen, eine über die Erfassungseinheit erfasste Größe und/oder eine aus über die Erfassungseinheit erfassten Bildern ermittelten Größe, welche insbesondere eine Distanz, einen Abstand und/oder eine Entfernung beschreibt, in Meter umzurechnen. Bevorzugt ist der Distanzumrechnungsparameter als ein minimaler Abstand im Raum, insbesondere in einer Ebene der Bewegung, von einer Position der Erfassungseinheit vor der Bewegung der Erfassungseinheit um die während der Bewegung feststehende Rotationsachse zu einer Position nach der Bewegung der Erfassungseinheit ausgebildet. Insbesondere ist eine Anordnung der Erfassungseinheit relativ zu der feststehenden Rotationsachse, welche insbesondere in der relativ zur Erfassungseinheit festgesetzten Position angeordnet ist, bekannt und in der Steuer- und/oder Regeleinheit hinterlegt. Vorzugsweise ist die Steuer- und/oder Regeleinheit dazu eingerichtet, den Distanzumrechnungsparameter in Abhängigkeit von der hinterlegten Anordnung der Erfassungseinheit relativ zu der feststehenden Rotationsachse und einem bei der Bewegung um die während der Bewegung feststehende Rotationsachse um die Rotationsachse überstrichenen Drehwinkel zu bestimmen. Insbesondere erfolgt die Bestimmung des Distanzumrechnungsparameters bei einer Bewegung innerhalb einer Ebene, welche zumindest im Wesentlichen senkrecht zur Rotationsachse ausgerichtet ist. Unter "im Wesentlichen senkrecht" soll insbesondere eine Ausrichtung einer Geraden, einer Ebene oder einer Richtung, insbesondere der Ebene, relativ zu einer anderen Geraden, einer anderen Ebene oder einer Bezugsrichtung, insbesondere der Rotationsachse, verstanden werden, wobei die Gerade, die Ebene oder die Richtung und die andere Gerade, die andere Ebene oder die Bezugsrichtung, insbesondere in einer Projektionsebene betrachtet, einen Winkel von 90° einschließen und der Winkel eine maximale Abweichung von insbesondere kleiner als 8°, vorteilhaft kleiner als 5° und besonders vorteilhaft kleiner als 2°, aufweist.

Vorzugsweise ist der Roboter teilautonom oder vollautonom ausgebildet. Bevorzugt ist der Roboter, insbesondere in dem regulären Betrieb, zu einer bestimmten Tätigkeit, beispielsweise zu einem Saugen eines Untergrunds, zu einem Mähen von Pflanzen, insbesondere Gras, zu einem Überwachen eines Bereichs, zu einem Transport von Gütern, beispielsweise Paketen oder Containern, o. dgl., vorgesehen, wobei insbesondere der Roboter dazu vorgesehen ist, die Tätigkeit bei und/oder zwischen einer Bestimmung des Distanzumrechnungsparameters auszuführen. Unter einem "teilautonomen Roboter" soll insbesondere ein Roboter, insbesondere der vorher genannte Roboter, verstanden werden, der in einem Betriebszustand selbstständig eine Tätigkeit ausführt, wobei eine den Roboter steuernde Elektronik und eine über die Elektronik ausgeführte Software als Teil des Roboters ausgebildet ist. Unter einem "vollautonomen Roboter" soll insbesondere ein teilautonomer Roboter verstanden werden, der eine eigene Energieversorgung umfasst und unabhängig von externen Geräten und/oder einem Benutzer zumindest im Wesentlichen endlos eine Tätigkeit ausführen kann. Die zumindest zwei angetriebenen Fortbewegungsmittel sind beispielsweise als Räder, als Antriebsrollen für Gleisketten, insbesondere als Teil eines Kettengetriebes, als Füße oder Stelzen, als Rotoren o. dgl. ausgebildet. Insbesondere ist der Roboter fahrbar und/oder flugfähig ausgebildet. Insbesondere ist die Erfassungseinheit zu einer Erfassung von Bildern vorgesehen. Bevorzugt ist über die Erfassungseinheit zu einem Zeitpunkt jeweils nur genau ein Bild erfassbar. Unter einer "monokularen Erfassungseinheit" soll insbesondere eine Erfassungseinheit verstanden werden, die zu einem Betrachten eines Objekts und/oder einer Umgebung mittels lediglich eines einzigen Auges vorgesehen ist. Die Erfassungseinheit umfasst vorzugsweise genau ein Erfassungselement. Insbesondere ist das Erfassungselement als eine, insbesondere monokulare, Kamera ausgebildet. Bevorzugt ist das Erfassungselement beabstandet von der Rotationsachse angeordnet. Besonders bevorzugt ist die Erfassungseinheit, insbesondere das Erfassungselement, in einer zumindest im Wesentlichen senkrecht zur Rotationsachse ausgerichteten Projektionsebene beabstandet von der Rotationsachse angeordnet. Vorzugsweise ist die Erfassungseinheit, insbesondere das Erfassungselement, zumindest teilweise an einer Außenseite des Roboters, insbesondere an einem Gehäuse des Roboters, angeordnet. Insbesondere ist die Erfassungseinheit, insbesondere das Erfassungselement, dazu vorgesehen und/oder derart angeordnet, dass über die Erfassungseinheit, insbesondere das Erfassungselement, zumindest teilweise eine den Roboter umgebende Umgebung erfassbar ist. Bevorzugt weist die Erfassungseinheit, insbesondere das Erfassungselement, einen Erfassungsbereich und eine Hauptbetrachtungsrichtung auf. Bevorzugt wird der Erfassungsbereich und die Hauptbetrachtungsrichtung bei einer Bewegung um die Rotationsachse zu einer Bestimmung des Distanzumrechnungsparameters mitbewegt und/oder gedreht. Insbesondere ist eine Drehung der Erfassungseinheit um die Rotationsachse zur Bestimmung des Distanzumrechnungsparameters als eine gebundene Rotation ausgebildet. Besonders bevorzugt ist die Erfassungseinheit, insbesondere das Erfassungselement, dazu vorgesehen, die den Roboter umgebende Umgebung und/oder Objekte in der den Roboter umgebenden Umgebung zu erfassen. Bevorzugt sind/ist die Erfassungseinheit und/oder die Steuer- und/oder Regeleinheit zu einem maschinellen Sehen ausgebildet, wobei insbesondere die den Roboter umgebende Umgebung und/oder Objekte in der den Roboter umgebenden Umgebung erkennbar und digital erfassbar sind. Vorzugsweise ist die Steuer- und/oder Regeleinheit dazu eingerichtet, zwei, insbesondere hinsichtlich einer Zugehörigkeit zu einem betrachteten Objekt oder hinsichtlich einer Position innerhalb der Umgebung, korrespondierende Pixel in zumindest zwei über die Erfassungseinheit, insbesondere das Erfassungselement, zeitlich voneinander versetzt erfassten Bildern zu ermitteln. Bevorzugt sind/ist die Erfassungseinheit und/oder die Steuer- und/oder Regeleinheit dazu vorgesehen und/oder dazu eingerichtet, einen optischen Fluss zwischen zwei aufgenommenen Bildern zu erkennen.

Vorzugsweise verläuft die Rotationsachse durch den Roboter. Es ist aber auch denkbar, dass die Rotationsachse vollständig außerhalb des Roboters angeordnet ist. Insbesondere ist zumindest ein Abstand der Erfassungseinheit zur Rotationsachse in der zumindest im Wesentlichen senkrecht zur Rotationsachse angeordneten Ebene/Projektionsebene in der Steuer- und/oder Regeleinheit hinterlegt. Die Ausrichtung der Erfassungseinheit relativ zur Rotationsachse ist bevorzugt über die Hauptbetrachtungsrichtung und/oder den Erfassungsbereich der Erfassungseinheit gegeben. Insbesondere entspricht ein Rotationswinkel der Hauptbetrachtungsrichtung und/oder des Erfassungsbereichs der Erfassungseinheit bei der Bewegung der Erfassungseinheit um die während der Bewegung feststehende Rotationsachse zur Bestimmung des Distanzumrechnungsparameters einem Drehwinkel, über den die Erfassungseinheit bei dieser Bewegung um die Rotationsachse bewegt wird.

Vorzugsweise ist die Erfassungseinheit und die Steuer- und/oder Regeleinheit zu einem Verfahren zu einer simultanen Positionsbestimmung und Kartenerstellung (SLAM-Verfahren) vorgesehen. Insbesondere ist die Steuer- und/oder Regeleinheit dazu eingerichtet, in Abhängigkeit von der ermittelten zurückgelegten Strecke und einer Startposition eines Betriebs des Roboters eine dreidimensionale Trajektorie des Roboters zu erzeugen. Vorzugsweise ist die Steuer- und/oder Regeleinheit dazu eingerichtet, in Abhängigkeit von der ermittelten zurückgelegten Strecke und einer Startposition eines Betriebs des Roboters und/oder der erzeugten dreidimensionalen Trajektorie des Roboters eine, insbesondere dreidimensionale, virtuelle Karte einer den Roboter umgebenden Umgebung zu erstellen, welche insbesondere durch eine von dem Roboter überfahrene oder überflogene Fläche gebildet ist. Insbesondere ist die Steuer- und/oder Regeleinheit dazu eingerichtet, eine Position und eine Ausrichtung des Roboters, insbesondere der Erfassungseinheit, in der virtuellen Karte zu ermitteln. Es ist denkbar, dass die Steuer- und/oder Regeleinheit dazu eingerichtet ist, die virtuelle Karte, insbesondere über eine Ausgabeeinheit, wie beispielsweise ein Display, des Roboters oder über eine Kommunikationseinheit des Roboters auf einer externen Einheit, anzuzeigen und/oder einem Benutzer auszugeben.

Es ist denkbar, dass der Roboter zumindest eine Sensoreinheit umfasst, die zu einer Erfassung zumindest eines Umgebungsparameters vorgesehen ist. Vorzugsweise umfasst die Sensoreinheit zumindest ein Sensorelement. Beispielsweise ist das Sensorelement als ein Regensensor, als ein odometrischer Sensor, als ein Positionserfassungssensor, wie beispielsweise ein GPS-Sensor o.dgl., als eine weitere Kamera, als ein Annäherungssensor, als ein Abstandssensor, als ein Trägheitssensor o. dgl. ausgebildet. Vorzugsweise sind die monokulare Erfassungseinheit und die Steuer- und/oder Regeleinheit dazu vorgesehen und/oder eingerichtet, die vom Roboter zurückgelegte Strecke, insbesondere über den Distanzumrechnungsparameter, unabhängig von der Sensoreinheit und/oder unabhängig von über die Sensoreinheit erfassten Daten zu ermitteln. Es ist denkbar, dass die Steuer- und/oder Regeleinheit dazu eingerichtet ist, erfasste Umgebungsparameter zur Erzeugung der dreidimensionalen Trajektorie des Roboters und/oder der virtuellen Karte heranzuziehen.

Durch die erfindungsgemäße Ausgestaltung des Roboters kann eine vorteilhaft genaue und direkte Ermittlung der von dem Roboter zurückgelegten Strecke ermöglicht werden, insbesondere unabhängig von Odometrie. Es können vorteilhaft geringe Herstellungskosten ermöglicht werden, insbesondere da zusätzliche Sensoren zur Ermittlung der von dem Roboter zurückgelegten Strecke entfallen können. Dadurch kann eine vorteilhaft kompakte Ausgestaltung ermöglicht werden. Es kann eine vorteilhaft flexible Ausgestaltung eines Antriebssystems des Roboters ermöglicht werden. Es kann eine vorteilhaft genaue Überwachung und Lokalisierung des Roboters ermöglicht werden. Insbesondere kann eine odometriefreie Ermittlung der von dem Roboter zurückgelegten Strecke auch bei kontaktfrei von einem Untergrund bewegbaren und/oder nicht direkt über Abtrieb bewegbaren Robotern ermöglicht werden, beispielsweise von fliegenden, schwebenden oder schwimmenden Robotern. Unter einem "Umgebungsparameter" soll insbesondere ein Parameter verstanden werden, welcher eine den Roboter umgebende Umgebung beschreibt. Beispielsweise ist der Umgebungsparameter als eine Sichtweite, als ein Regenzustand der Umgebung, als eine Feuchtigkeit einer Umgebungslust oder eines Untergrunds, als eine Temperatur o. dgl. ausgebildet. Vorzugsweise kann eine frame-to-frame-Auswertung von aufgenommenen Bildern über den Distanzumrechnungsparameter zu einer scene-to-frame-Auswertung verwendet werden, wobei insbesondere die von dem Roboter zurückgelegte Strecke metrisch ermittelbar ist.

Des Weiteren wird vorgeschlagen, dass die zumindest zwei angetriebenen Fortbewegungsmittel koaxial zueinander angeordnet und differentiell antreibbar sind, wobei insbesondere die Rotationsachse eine gemeinsame Drehachse der zwei Fortbewegungsmittel zumindest im Wesentlichen in einem Punkt, insbesondere einem Mittelpunkt der Drehachse, schneidet und insbesondere zumindest im Wesentlichen senkrecht zu einer Horizontalen, insbesondere der Ebene/ Projektionsebene, angeordnet ist. Es kann eine vorteilhaft einfache und kostengünstige Ausgestaltung des Roboters ermöglicht werden. Es kann vorteilhaft einfach eine von der Rotationsachse beabstandete Anordnung der Erfassungseinheit sichergestellt werden. Vorzugsweise sind die koaxial zueinander angeordneten und differentiell antreibbaren Fortbewegungsmittel als Räder oder als Antriebsrollen für Ketten, insbesondere Gleisketten, ausgebildet. Insbesondere bei einer Ausgestaltung der Fortbewegungsmittel als Antriebsrollen eines Kettengetriebes sind vorzugsweise die Gleisketten, insbesondere Ebenen, in denen sich die einzelnen Gleisketten bewegen, zumindest im Wesentlichen parallel zueinander angeordnet. Vorzugsweise ist die Rotationsachse zumindest im Wesentlichen senkrecht zur Drehachse der Fortbewegungsmittel angeordnet. Vorzugsweise ist die Erfassungseinheit, insbesondere das Erfassungselement, in einer zumindest im Wesentlichen parallel zur Drehachse und zumindest im Wesentlichen senkrecht zur Rotationsachse ausgerichteten Ebene angeordnet. Es ist denkbar, dass die Erfassungseinheit, insbesondere das Erfassungselement, auf der Drehachse oder beabstandet von der Drehachse angeordnet ist. Unter "differentiell antreibbar" soll insbesondere verstanden werden, dass die zumindest zwei Fortbewegungsmittel unabhängig voneinander, insbesondere mit einem unterschiedlichen Drehmoment, angetrieben werden können. Vorzugsweise sind die zumindest zwei Fortbewegungsmittel derart antreibbar, dass sich diese in voneinander verschiedene Richtungen um die Drehachse bewegen. Bevorzugterweise sind die zumindest zwei Fortbewegungsmittel dazu vorgesehen, die Erfassungseinheit um die die Drehachse in dem Mittelpunkt der Drehachse schneidende und zumindest im Wesentlichen senkrecht zur Drehachse angeordnete Rotationsachse zu bewegen, insbesondere zu drehen. Es ist denkbar, dass der Roboter mehr als zwei Fortbewegungsmittel umfasst. Zusätzlich ist denkbar, dass der Roboter mehr als zwei angetriebene Fortbewegungsmittel umfasst.

Zudem wird vorgeschlagen, dass der Roboter zumindest eine, insbesondere die vorher genannte, Steuerungs- und/oder Antriebseinheit zu einer Fortbewegung des Roboters umfasst, wobei die Steuer- und/oder Regeleinheit dazu eingerichtet ist, zu einer Bestimmung des Distanzumrechnungsparameters zumindest einen Steuerungs- und/oder Antriebsparameter der Steuerungs- und/oder Antriebseinheit, insbesondere zu einem Ausführen einer Kalibrationsbewegung, einzustellen. Es kann vorteilhaft eine bedarfsweise und/oder situationsspezifische Bestimmung des Distanzumrechnungsparameters ermöglicht werden, wobei insbesondere sichergestellt werden kann, dass der Distanzumrechnungsparameter unter geeigneten Bedingungen hinsichtlich einer Bewegung der Erfassungseinheit während der Bestimmung bestimmt wird. Es kann eine vorteilhaft gleichbleibende Genauigkeit einer Ermittlung der vom Roboter zurückgelegten Strecke ermöglicht werden, insbesondere da eine regelmäßige Bestimmung des Distanzumrechnungsparameters über eine direkte Steuerung des Roboters sichergestellt werden kann. Unter einem "Steuerungs- und/oder Antriebsparameter" soll insbesondere ein Parameter verstanden werden, der eine Steuerung und/oder einen Antrieb des Roboters zur Fortbewegung des Roboters beeinflusst. Insbesondere ist der Steuerungs- und/oder Antriebsparameter zu einer Einstellung eines Lenkeinschlags des Roboters, insbesondere eines Steuermittels des Roboters, und/oder zu einer Einstellung einer Antriebskraft zumindest eines der angetriebenen Fortbewegungsmittel vorgesehen. Insbesondere ist das Steuermittel als ein weiteres Fortbewegungsmittel ausgebildet, welches insbesondere um eine Steuerachse drehbar ist. Bevorzugt ist das weitere Fortbewegungsmittel um die Steuerachse zu einem Lenkeinschlag antreibbar. Vorzugsweise ist die Steuerachse des weiteren Fortbewegungsmittels zumindest im Wesentlichen senkrecht zur Drehachse der zumindest zwei Fortbewegungsmittel und/oder zumindest im Wesentlichen parallel zur Rotationsachse ausgerichtet. Unter "im Wesentlichen parallel" soll insbesondere eine Ausrichtung einer Geraden, einer Ebene oder einer Richtung, insbesondere der Steuerachse, relativ zu einer anderen Geraden, einer anderen Ebene oder einer Bezugsrichtung, insbesondere der Rotationsachse, verstanden werden, wobei die Gerade, die Ebene oder die Richtung gegenüber der anderen Geraden, der anderen Ebene oder der Bezugsrichtung eine Abweichung von insbesondere kleiner als 8°, vorteilhaft kleiner als 5° und besonders vorteilhaft kleiner als 2°, aufweist. Es ist auch denkbar, dass die zumindest zwei angetriebenen Fortbewegungsmittel oder eines der angetriebenen Fortbewegungsmittel als Steuermittel ausgebildet sind/ist und zu einer Lenkung des Roboters um eine Steuerachse angetrieben bewegbar sind/ist. Beispielsweise in einer Ausgestaltung der angetriebenen Fortbewegungsmittel als Rotoren ist denkbar, dass die angetriebenen Fortbewegungsmittel zusammen oder einzeln um eine Steuerachse angetrieben bewegbar sind, die insbesondere verschieden von einer Drehachse der Rotoren/des jeweiligen Rotors ausgebildet ist. Vorzugsweise umfasst die Steuerungs- und/oder Antriebseinheit zumindest einen Motor zu einem Antrieb der Fortbewegungsmittel. Beispielsweise ist der zumindest eine Motor als ein Elektromotor oder als ein anderer, einem Fachmann bekannter Motor ausgebildet. Es ist denkbar, dass die angetriebenen Fortbewegungsmittel jeweils einzeln von einem Motor der Steuerungs- und/oder Antriebseinheit angetrieben sind oder dass jeweils zumindest zwei koaxial zueinander angeordnete angetriebene Fortbewegungsmittel des Roboters über einen Motor der Steuerungs- und/oder Antriebseinheit angetrieben sind. Insbesondere sind die angetriebenen Fortbewegungsmittel des Roboters als Teil der Steuerungs- und/oder Antriebseinheit ausgebildet. Bevorzugt ist die Steuer- und/oder Regeleinheit dazu eingerichtet, über den Steuerungs- und/oder Antriebsparameter zumindest eine Ausrichtung des zumindest einen Steuermittels relativ zur Steuerachse des Steuermittels einzustellen, insbesondere zu einer Lenkung des Roboters. Vorzugsweise ist die Steuer- und/oder Regeleinheit dazu eingerichtet, über den Steuerungs- und/oder Antriebsparameter zumindest eine auf ein Fortbewegungsmittel zu übertragende Antriebskraft des zumindest einen Motors der Steuerungs- und/oder Antriebseinheit einzustellen. Besonders bevorzugt ist die Steuer- und/oder Regeleinheit dazu eingerichtet, über den Steuerungs- und/oder Antriebsparameter eine Kalibrationsbewegung des Roboters auszuführen. Insbesondere ist die Steuer- und/oder Regeleinheit dazu eingerichtet, bei der Kalibrationsbewegung des Roboters den Distanzumrechnungsparameter zu bestimmen. Bevorzugt ist die Kalibrationsbewegung des Roboters als eine/die Bewegung der Erfassungseinheit um die während der Bewegung feststehende Rotationsachse ausgebildet, wobei die Erfassungseinheit während der Kalibrationsbewegung einen gleichbleibenden und bekannten Abstand zur Rotationsachse aufweist. Vorzugsweise ist die Erfassungseinheit dazu vorgesehen, bei der Kalibrationsbewegung in dem bekannten Abstand und in der bekannten Ausrichtung relativ zur Rotationsachse innerhalb einer Ebene, die insbesondere zumindest im Wesentlichen senkrecht zur Rotationsachse und/oder zumindest im Wesentlichen parallel zu einem Untergrund des Roboters ausgerichtet ist, um die Rotationsachse bewegt zu werden. Insbesondere ist die/eine Kalibrationsbewegung unabhängig von einer Ausrichtung der Erfassungseinheit, wobei sich vorzugsweise die Ausrichtung der Erfassungseinheit während der Bewegung um die Rotationsachse, mit Ausnahme der Rotation um die Rotationsachse, nicht ändert. Beispielsweise ist eine Bestimmung des Distanzumrechnungsparameters bei einer Kalibrationsbewegung denkbar, wobei der Erfassungsbereich und/oder die Hauptbetrachtungsrichtung der Erfassungseinheit zumindest im Wesentlichen parallel zur Rotationsachse, beispielsweise nach oben, ausgerichtet ist oder eine andere aus einer Ebene der Kalibrationsbewegung und/oder in der sich die Erfassungseinheit während der Kalibrationsbewegung bewegt, heraus gerichtete Ausrichtung aufweist.

Ferner wird vorgeschlagen, dass die Steuer- und/oder Regeleinheit dazu eingerichtet ist, mittels einer Auswertung von zwei über die Erfassungseinheit zeitlich versetzt zueinander aufgenommenen Bildern einen, insbesondere betrachtungsspezifischen, Distanzparameter zu ermitteln und den ermittelten Distanzparameter über den bestimmten Distanzumrechnungsparameter zur Ermittlung der, insbesondere zwischen zwei Erfassungszeitpunkten der zwei Bilder, zurückgelegten Strecke zu skalieren. Es kann eine vorteilhaft einfache und schnelle Ermittlung der vom Roboter zurückgelegten Strecke ermöglicht werden. Es kann eine vorteilhaft einfache und kostengünstige Ausgestaltung der Steuer- und/oder Regeleinheit ermöglicht werden, insbesondere da durch die Skalierung der ermittelten Distanzparameter rechenintensive Operationen vorteilhaft entfallen können und somit eine vorteilhaft geringe Rechenleistung benötigt wird. Dadurch können vorteilhaft geringe Herstellungskosten ermöglicht werden. Vorzugsweise ist die Erfassungseinheit, insbesondere das Erfassungselement, dazu vorgesehen, insbesondere während eines Betriebs des Roboters, periodisch oder kontinuierlich, insbesondere mit einer Frequenz von mindestens 5 Hz, vorzugsweise mindestens 10 Hz, bevorzugt mindestens 30 Hz und besonders bevorzugt mindestens 60 Hz, Bilder aufzunehmen. Bevorzugt ist die Steuer- und/oder Regeleinheit dazu eingerichtet, insbesondere über ein Verfahren der Epipolargeometrie, über zwei zeitlich versetzt zueinander aufgenommene Bilder eine als eine von dem Roboter in einem Zeitintervall zwischen den zwei Bildern zurückgelegte Strecke ausgebildeter Distanzparameter zu ermitteln. Es ist auch denkbar, dass der Distanzparameter als eine Abmessung eines über die Erfassungseinheit erfassten Objekts, als eine Entfernung zu einem erfassten Objekt, als eine Entfernung von zwei erfassten Objekten zueinander o. dgl. ausgebildet ist. Insbesondere ist der Distanzparameter dimensionslos ausgebildet oder weist eine beliebige von einer metrischen Einheit verschiedene Einheit auf. Besonders bevorzugt ist der Distanzumrechnungsparameter dazu vorgesehen, den Distanzparameter in eine metrische Einheit, insbesondere in Meter, umzurechnen und/oder zu skalieren. Vorzugsweise ist die Steuer- und/oder Regeleinheit dazu eingerichtet, insbesondere periodisch, für jedes Zeitintervall zwischen zwei über die Erfassungseinheit aufgenommene Bilder zumindest einen Distanzparameter zu ermitteln. Es ist aber auch denkbar, dass die Steuer- und/oder Regeleinheit dazu eingerichtet ist, lediglich für einen Teil der aufgenommenen Bilder zumindest einen Distanzparameter zu ermitteln, wobei sich insbesondere ein Zeitintervall zur Ermittlung des Zeitintervalls über mehrere aufgenommene Bilder erstreckt. Beispielsweise ist die Steuer- und/oder Regeleinheit dazu eingerichtet, jedes zweite aufgenommene Bild zur Ermittlung eines Distanzparameters heranzuziehen, wobei vorzugsweise ein Distanzparameter jeweils aus einem Vergleich zwischen einem aufgenommenen Bild und einem übernächsten aufgenommenen Bild ermittelt wird. Insbesondere ist die Steuer- und/oder Regeleinheit dazu eingerichtet, zumindest einen Distanzparameter, den Distanzumrechnungsparameter und/oder die von dem Roboter zurückgelegte Strecke mit einer Frequenz von mindestens 5 Hz, vorzugsweise mindestens 15 Hz und bevorzugt mindestens 30 Hz, zu ermitteln. Insbesondere beträgt eine Frequenz der Steuer- und/oder Regeleinheit zur Ermittlung des Distanzparameters, insbesondere des Drehwinkels, zur Bestimmung des Distanzumrechnungsparameters und/oder zur Ermittlung der von dem Roboter zurückgelegten Strecke, insbesondere hardwarebedingt, höchstens 360 Hz, vorzugsweise höchstens 200 Hz und bevorzugt höchstens 120 Hz. Bevorzugt ist ein dimensionsloser oder in der beliebigen von einer metrischen Einheit verschiedenen Einheit vorliegender Wert einer zurückgelegten Strecke der Erfassungseinheit, insbesondere des Erfassungselements, bei einer Bewegung der Erfassungseinheit, insbesondere des Erfassungselements, um die während der Bewegung feststehende Rotationsachse, insbesondere in einem bekannten Abstand zur Rotationsachse und/oder in einer bekannten Ausrichtung relativ zur Rotationsachse, in Abhängigkeit von einem durch die Erfassungseinheit, insbesondere das Erfassungselement, überstrichenen Drehwinkel um die Rotationsachse in der Steuer- und/oder Regeleinheit hinterlegt. Es ist auch denkbar, dass die Steuer- und/oder Regeleinheit dazu eingerichtet ist, einen dimensionslosen oder in der beliebigen von einer metrischen Einheit verschiedenen Einheit vorliegenden Wert einer zurückgelegten Strecke der Erfassungseinheit, insbesondere des Erfassungselements, bei einer Bewegung der Erfassungseinheit, insbesondere des Erfassungselements, um die während der Bewegung feststehende Rotationsachse, insbesondere in einem bekannten Abstand zur Rotationsachse und/oder in einer bekannten Ausrichtung relativ zur Rotationsachse, in Abhängigkeit von einem während der Bewegung um die Rotationsachse durch die Erfassungseinheit, insbesondere das Erfassungselement, überstrichenen Drehwinkel zu ermitteln. Besonders bevorzugt ist die Steuer- und/oder Regeleinheit dazu eingerichtet, mittels eines vor der Bewegung der Erfassungseinheit um die während der Bewegung feststehende Rotationsachse, insbesondere über die Erfassungseinheit, aufgenommenen Bilds und eines nach der Bewegung der Erfassungseinheit um die während der Bewegung feststehende Rotationsachse, insbesondere über die Erfassungseinheit, aufgenommenen Bilds, insbesondere mittels eines Verfahrens der Epipolargeometrie, den während der Bewegung um die Rotationsachse durch die Erfassungseinheit, insbesondere das Erfassungselement, überstrichenen Drehwinkel zu ermitteln. Insbesondere ist die Steuer- und/oder Regeleinheit dazu eingerichtet, insbesondere mittels des Algorithmus, aus über die Erfassungseinheit aufgenommenen Bildern den Distanzumrechnungsparameter zu bestimmen und/oder die von dem Roboter zurückgelegte Strecke und/oder einen Distanzparameter, insbesondere den Drehwinkel, zu ermitteln während mittels der Erfassungseinheit Bilder und/oder ein weiteres Bild aufgenommen wird. Bevorzugt ist die Steuer- und/oder Regeleinheit dazu eingerichtet, insbesondere mittels des Algorithmus, den Distanzumrechnungsparameter zu bestimmen und/oder die von dem Roboter zurückgelegte Strecke und/oder einen Distanzparameter, insbesondere den Drehwinkel, zu ermitteln bis/bevor ein weiteres zur Bestimmung des Distanzumrechnungsparameters, zur Ermittlung der von dem Roboter zurückgelegten Strecke und/oder zur Ermittlung eines Distanzparameters, insbesondere des Drehwinkels, vorgesehenes Bild aufgenommen wird und insbesondere an die Steuer- und/oder Regeleinheit übermittelt wird. Beispielsweise beträgt ein Zeitintervall zwischen zwei zur Ermittlung des Distanzparameters, insbesondere des Drehwinkels, zur Bestimmung des Distanzumrechnungsparameters und/oder zur Ermittlung der von dem Roboter zurückgelegten Strecke herangezogenen aufgenommenen Bildern mindestens 1 ms, vorzugsweise mindestens 2 ms und bevorzugt mindestens 3 ms und/oder höchstens 30 ms, vorzugsweise höchstens 20 ms und bevorzugt höchstens 10 ms. Insbesondere ist die Steuer- und/oder Regeleinheit dazu eingerichtet, einen Teil, insbesondere jedes Zweite, der mittels der Erfassungseinheit aufgenommenen Bilder zur Ermittlung des Distanzparameters, insbesondere des Drehwinkels, zur Bestimmung des Distanzumrechnungsparameters und/oder zur Ermittlung der von dem Roboter zurückgelegten Strecke heranzuziehen.

Des Weiteren wird vorgeschlagen, dass die Steuer- und/oder Regeleinheit zumindest einen, insbesondere den vorher genannten, Algorithmus zu einer Bestimmung des Distanzumrechnungsparameters aufweist und dazu eingerichtet ist, den Algorithmus, insbesondere bei einem regulären Betrieb des Roboters, kontinuierlich oder periodisch auszuführen. Es kann eine vorteilhaft automatische Bestimmung des Distanzumrechnungsparameters während eines regulären Betriebs des Roboters ermöglicht werden. Dadurch können zur Bestimmung des Distanzumrechnungsparameters dedizierte Kalibrationsbewegungen vorteilhaft entfallen. Es kann eine vorteilhaft hohe Effizienz des Roboters bei einer Tätigkeit im regulären Betrieb ermöglicht werden, beispielsweise bei einem Saugbetrieb, einem Mähbetrieb, einer Überwachung o.dgl. Es kann eine vorteilhaft hohe Genauigkeit einer Ermittlung der vom Roboter zurückgelegten Strecke ermöglicht werden, insbesondere da in Abhängigkeit von einem Bearbeitungsbereich des Roboters und/oder einem Bewegungsmuster des Roboters im regulären Betrieb eine vorteilhaft häufige Bestimmung des Distanzumrechnungsparameters zur Ermittlung der vom Roboter zurückgelegten Strecke erfolgen kann. Insbesondere ist der Algorithmus zur Ermittlung der von dem Roboter zurückgelegten Strecke in Abhängigkeit von dem bestimmten Distanzumrechnungsparameter vorgesehen. Vorzugsweise ist die Steuer- und/oder Regeleinheit dazu eingerichtet, eine in einem Zeitintervall zwischen zwei zu einer Bestimmung des Distanzumrechnungsparameters vorgesehenen aufgenommenen Bildern von dem Roboter ausgeführte Bewegung, insbesondere eine zurückgelegte Strecke und/oder eine Drehung des Roboters, zu ermitteln, vorzugsweise mittels eines Verfahrens der Epipolargeometrie über die zwei Bilder. Besonders bevorzugt ist die Steuer- und/oder Regeleinheit dazu eingerichtet, den Distanzumrechnungsparameter mittels der zwei Bilder zu bestimmen, falls sich die ermittelte innerhalb des Zeitintervalls ausgeführte Bewegung des Roboters, insbesondere die zurückgelegte Strecke und/oder die Drehung des Roboters, innerhalb zumindest eines Bewegungsgrenzbereichs befindet. Insbesondere umfasst der Bewegungsgrenzbereich zumindest einen Grenzbereich für eine translatorische Bewegung des Roboters, insbesondere der Erfassungseinheit und/oder des Erfassungselements, zumindest einen Grenzbereich für eine Rotation der Erfassungseinheit, insbesondere des Erfassungselements, um die Rotationsachse und/oder zumindest einen Grenzbereich für eine Abweichung einer Trajektorie der Bewegung des Roboters von einer, insbesondere horizontalen, Ebene. Insbesondere entspricht der Grenzbereich für eine translatorische Bewegung des Roboters, insbesondere der Erfassungseinheit und/oder des Erfassungselements, einer Strecke zwischen 0 cm und höchstens 2 cm, vorzugsweise zwischen 0 cm und höchstens 1 cm und bevorzugt zwischen 0 cm und höchstens 0,5 cm. Bevorzugt ist die Steuer- und/oder Regeleinheit dazu eingerichtet, die Bewegung des Roboters, insbesondere die translatorische Bewegung, die Rotation und/oder die Abweichung der Trajektorie der Bewegung des Roboters von der Ebene, mittels eines zuvor/in der Vergangenheit bestimmten Distanzumrechnungsparameters, mittels eines Verfahrens der Epipolargeometrie aus erfassten Bildern und/oder mittels einer erfassten Bewegungskenngröße eines anderen Sensorelements der Sensoreinheit zu ermitteln. Besonders bevorzugt ist die Steuer- und/oder Regeleinheit dazu eingerichtet, den Algorithmus beim regulären Betrieb des Roboters auszuführen, wobei, insbesondere kontinuierlich oder periodisch, der Distanzumrechnungsparameter bestimmt wird, falls eine Bewegung des Roboters, welche innerhalb eines zur Bestimmung des Distanzumrechnungsparameters betrachteten Zeitintervalls erfolgt, innerhalb des Bewegungsgrenzbereichs liegt. Beispielsweise ist die Steuer- und/oder Regeleinheit dazu eingerichtet, eine Bestimmung des Distanzumrechnungsparameters auszusetzen und/oder einen bestimmten Distanzumrechnungsparameter, insbesondere zur Ermittlung der von dem Roboter zurückgelegten Strecke, zu verwerfen, falls die Bewegung des Roboters den Bewegungsgrenzbereich überschreitet, insbesondere keine Rotation um die feststehende Rotationsachse ausführt und/oder die Bewegung um mehr als 7°, vorzugsweise mehr als 5° und bevorzugt mehr als 3°, von einer Ebene abweicht.

Außerdem geht die Erfindung aus von einem Verfahren zu einer Ermittlung einer, insbesondere der vorher genannten, von einem Roboter, insbesondere einem teilautonomen Roboter, zurückgelegten Strecke, wobei der Roboter zumindest zwei angetriebene Fortbewegungsmittel, insbesondere Räder, und eine, insbesondere monokulare, Erfassungseinheit umfasst, wobei die zumindest zwei Fortbewegungsmittel dazu vorgesehen sind, die Erfassungseinheit um eine, insbesondere die vorher genannte, Rotationsachse, welche in einer relativ zur Erfassungseinheit festgesetzten Position angeordnet ist, zu drehen und wobei die Erfassungseinheit und die Rotationsachse beabstandet voneinander angeordnet sind, insbesondere eines erfindungsgemäßen Roboters.

Es wird vorgeschlagen, dass in zumindest einem Verfahrensschritt mittels zumindest einer, insbesondere der vorher genannten, Steuer- und/oder Regeleinheit des Roboters zumindest ein, insbesondere ein vorher genannter, Distanzumrechnungsparameter in Abhängigkeit von einer Bewegung der Erfassungseinheit um die während der Bewegung feststehende Rotationsachse, insbesondere in einem bekannten Abstand zur Rotationsachse und/oder in einer bekannten Ausrichtung relativ zur Rotationsachse, bestimmt wird, wobei in zumindest einem weiteren Verfahrensschritt die zurückgelegte Strecke des Roboters in Abhängigkeit von dem bestimmten Distanzumrechnungsparameter ermittelt wird. In zumindest einem Verfahrensschritt des Verfahrens erfolgt mittels der monokularen Erfassungseinheit, insbesondere dem Erfassungselement der Erfassungseinheit, eine Aufnahme von Bildern einer den Roboter umgebenden Umgebung. Bevorzugt wird mittels der Steuer- und/oder Regeleinheit in Abhängigkeit von zwei über einen Zeitintervall zeitlich zueinander versetzt aufgenommenen Bildern zumindest ein Distanzparameter ermittelt, welcher insbesondere dimensionslos ausgebildet ist oder eine beliebige von einer metrischen Einheit verschiedene Einheit aufweist. Vorzugsweise wird mittels der Steuer- und/oder Regeleinheit bei einer Bestimmung des Distanzumrechnungsparameters ein bei der Bewegung der Erfassungseinheit, insbesondere des Erfassungselements, um die während der Bewegung feststehende Rotationsachse, insbesondere in einem bekannten Abstand zur Rotationsachse und/oder in einer bekannten Ausrichtung relativ zur Rotationsachse, durch die Erfassungseinheit, insbesondere das Erfassungselement, überstrichener Drehwinkel um die Rotationsachse ermittelt, vorzugsweise über ein Verfahren der Epipolargeometrie. Vorzugsweise wird mittels der Steuer- und/oder Regeleinheit in Abhängigkeit von dem ermittelten Drehwinkel der als eine während der Bewegung der Erfassungseinheit, insbesondere des Erfassungselements, um die während der Bewegung feststehende Rotationsachse, insbesondere in einem bekannten Abstand zur Rotationsachse und/oder in einer bekannten Ausrichtung relativ zur Rotationsachse, zurückgelegte Distanz der Erfassungseinheit, insbesondere des Erfassungselements, ausgebildete Distanzumrechnungsparameter bestimmt, welcher vorzugsweise über die bekannte Anordnung der Erfassungseinheit, insbesondere des Erfassungselements, relativ zur Rotationsachse in Metern angegeben wird. Insbesondere wird in zumindest einem Verfahrensschritt, insbesondere nach der Bestimmung des Distanzumrechnungsparameters, zumindest eine von dem Roboter zurückgelegte Strecke in Abhängigkeit von dem bestimmten Distanzumrechnungsparameter und einem ermittelten Distanzparameter der Strecke ermittelt. Insbesondere wird der ermittelte Distanzparameter mittels der Steuer- und/oder Regeleinheit über den Distanzumrechnungsparameter skaliert und/oder in Meter umgerechnet.

Durch die erfindungsgemäße Ausgestaltung des Verfahrens kann eine vorteilhaft genaue und direkte Ermittlung der von dem Roboter zurückgelegten Strecke ermöglicht werden, insbesondere unabhängig von Odometrie. Es können vorteilhaft geringe Herstellungskosten ermöglicht werden, insbesondere da zusätzliche Sensoren zur Ermittlung der von dem Roboter zurückgelegten Strecke entfallen können. Dadurch kann eine vorteilhaft kompakte Ausgestaltung ermöglicht werden. Es kann eine vorteilhaft flexible Ausgestaltung eines Antriebssystems des Roboters ermöglicht werden. Es kann eine vorteilhaft genaue Überwachung und Lokalisierung des Roboters ermöglicht werden. Insbesondere kann eine odometriefreie Ermittlung der von dem Roboter zurückgelegten Strecke auch bei kontaktfrei von einem Untergrund bewegbaren und/oder nicht direkt über Abtrieb bewegbaren Robotern ermöglicht werden, beispielsweise von fliegenden, schwebenden oder schwimmenden Robotern.

Des Weiteren wird vorgeschlagen, dass eine Bestimmung des Distanzumrechnungsparameters mittels der Steuer- und/oder Regeleinheit, insbesondere über einen/den vorher genannten Algorithmus, kontinuierlich oder periodisch jeweils über ein Zeitintervall erfolgt, wobei ein bestimmter Wert des Distanzumrechnungsparameters in Abhängigkeit von einer Bewegung des Roboters, welche innerhalb des Zeitintervalls erfolgt, entweder zur Ermittlung der zurückgelegten Strecke herangezogen oder verworfen wird. Es kann eine vorteilhaft automatische Bestimmung des Distanzumrechnungsparameters während eines regulären Betriebs des Roboters ermöglicht werden. Dadurch können zur Bestimmung des Distanzumrechnungsparameters dedizierte Kalibrationsbewegungen vorteilhaft entfallen. Es kann eine vorteilhaft hohe Effizienz des Roboters bei einer Tätigkeit im regulären Betrieb ermöglicht werden, beispielsweise bei einem Saugbetrieb, einem Mähbetrieb, einer Überwachung o.dgl. Es kann eine vorteilhaft hohe Genauigkeit einer Ermittlung der vom Roboter zurückgelegten Strecke ermöglicht werden, insbesondere da in Abhängigkeit von einem Bearbeitungsbereich des Roboters und/oder einem Bewegungsmuster des Roboters im regulären Betrieb eine vorteilhaft häufige Bestimmung des Distanzumrechnungsparameters zur Ermittlung der vom Roboter zurückgelegten Strecke erfolgen kann. Bevorzugt wird der Algorithmus mittels der Steuer- und/oder Regeleinheit in Abhängigkeit von einer Erfassung von Bildern über die Erfassungseinheit ausgeführt, welche insbesondere kontinuierlich oder periodisch erfolgt. Insbesondere ist der Zeitintervall zur Bestimmung des Distanzumrechnungsparameters als ein zeitlicher Abstand zwischen Erfassungszeitpunkten von zumindest zwei zur Bestimmung des Distanzumrechnungsparameters herangezogenen, insbesondere über die Erfassungseinheit aufgenommenen, Bildern ausgebildet. Bevorzugt wird nach einer Erfassung der zwei Bilder der Algorithmus mittels der Steuer- und/oder Regeleinheit ausgeführt und/oder der Distanzumrechnungsparameter über die zwei Bilder bestimmt, insbesondere falls eine Bewegung des Roboters, insbesondere der Erfassungseinheit und/oder des Erfassungselements, welche innerhalb des Zeitintervalls erfolgt ist, innerhalb des Bewegungsgrenzbereichs liegt.

Zudem wird vorgeschlagen, dass in zumindest einem Verfahrensschritt mittels der Steuer- und/oder Regeleinheit und einer Steuerungs- und/oder Antriebseinheit des Roboters zur Bestimmung des Distanzumrechnungsparameters zumindest eine Kalibrationsbewegung des Roboters erfolgt, wobei zumindest die Erfassungseinheit in einem bekannten Abstand zur Rotationsachse und in einer bekannten Ausrichtung relativ zur Rotationsachse um die Rotationsachse bewegt wird. Es kann vorteilhaft eine Steuerung des Roboters zur Bestimmung des Distanzumrechnungsparameters erfolgen. Es kann vorteilhaft eine bedarfsweise und/oder situationsspezifische Bestimmung des Distanzumrechnungsparameters ermöglicht werden, wobei insbesondere sichergestellt werden kann, dass der Distanzumrechnungsparameter unter geeigneten Bedingungen hinsichtlich einer Bewegung der Erfassungseinheit während der Bestimmung bestimmt wird. Es kann eine vorteilhaft gleichbleibende Genauigkeit einer Ermittlung der vom Roboter zurückgelegten Strecke ermöglicht werden, insbesondere da eine regelmäßige Bestimmung des Distanzumrechnungsparameters über eine direkte Steuerung des Roboters sichergestellt werden kann. Vorzugsweise ist die Kalibrationsbewegung als Bewegung des Roboters, insbesondere der Erfassungseinheit, außerhalb eines regulären Betriebs des Roboters ausgebildet, welche insbesondere zwischen regulären Bewegungen, beispielsweise zum Ausführen der Tätigkeit, des Roboters erfolgt. Vorzugsweise erfolgt die Kalibrationsbewegung innerhalb einer Ebene, welche zumindest im Wesentlichen senkrecht zur Rotationsachse verläuft. Insbesondere erfolgt die Kalibrationsbewegung mittels der Steuer- und/oder Regeleinheit über eine Ansteuerung der Steuerungs- und/oder Antriebseinheit, insbesondere eines Motors der Steuerungs- und/oder Antriebseinheit. Vorzugsweise erfolgt die Kalibrationsbewegung mittels der Steuerungs- und/oder Antriebseinheit über einen Antrieb der zumindest zwei Fortbewegungsmittel und/oder des zumindest einen Steuermittels, die/das insbesondere derart angetrieben werden/wird, dass sich zumindest die Erfassungseinheit, insbesondere das Erfassungselement, innerhalb einer Ebene, die zumindest im Wesentlichen senkrecht zur Rotationsachse verläuft, in einem gleichbleibenden Abstand um die Rotationsachse bewegt, wobei insbesondere eine Ausrichtung der Erfassungseinheit, insbesondere des Erfassungselements, relativ zur Rotationsachse ebenfalls um die Rotationsachse gedreht wird. Bevorzugt wird zumindest die Erfassungseinheit, insbesondere das Erfassungselement, bei der Kalibrationsbewegung um einen, insbesondere den vorher genannten, Drehwinkel um die Rotationsachse bewegt, insbesondere innerhalb der Ebene, die sich zumindest im Wesentlichen senkrecht zur Rotationsachse erstreckt. Bevorzugt wird die Hauptbetrachtungsrichtung und/oder der Erfassungsbereich der Erfassungseinheit bei der Kalibrationsbewegung um den Drehwinkel um die Rotationsachse gedreht.

Ferner wird vorgeschlagen, dass in zumindest einem Verfahrensschritt bei einer Ermittlung einer innerhalb eines Zeitintervalls zurückgelegten Strecke des Roboters mittels der Steuer- und/oder Regeleinheit in Abhängigkeit von einem Fehler eines ermittelten Distanzparameters des Roboters, von einem Fehler des zur Ermittlung der zurückgelegten Strecke herangezogenen Distanzumrechnungsparameters und/oder von einer zu einer innerhalb eines vorherigen Zeitintervalls zurückgelegten Strecke ermittelten Positionsfehlerkenngröße des Roboters zumindest eine Positionsfehlerkenngröße des Roboters ermittelt wird. Es kann eine Ungenauigkeit der Ermittlung der von dem Roboter zurückgelegten Strecke und/oder der daraus bestimmten Position des Roboters überwacht werden, welche insbesondere von einem zeitlichen Abstand zu einer letzten Bestimmung des Distanzumrechnungsparameters abhängt. Unter einer "Positionsfehlerkenngröße" soll insbesondere eine Kenngröße verstanden werden, welche einen Fehler einer ermittelten Position des Roboters innerhalb einer Umgebung und/oder im Raum angibt. Vorzugsweise wird mittels der Steuer- und/oder Regeleinheit zumindest in Abhängigkeit von ermittelten innerhalb eines Zeitraums vom Roboter zurückgelegten Strecken eine Position des Roboters bestimmt. Es ist denkbar, dass eine Bestimmung einer Position des Roboters innerhalb einer Umgebung und/oder im Raum in Abhängigkeit von einem Startpunkt, insbesondere bei einem Beginn einer Tätigkeit oder eines Betriebs, des Roboters erfolgt, beispielsweise von einer Position einer Ladestation. Vorzugsweise wird mittels der Steuer-und/oder Regeleinheit bei einer Bestimmung des Distanzumrechnungsparameters, bei einer Ermittlung des Distanzparameters und/oder bei einer Ermittlung eines überstrichenen Winkels, insbesondere des Drehwinkels, um die Rotationsachse ein Fehler eines derart erhaltenen Werts ermittelt, welcher beispielsweise aus einem Verfahren der Epipolargeometrie, aus einer Rundung eines zu verwendenden Werts, aus einer Bildunschärfe, aus einer maximalen Auflösung des Erfassungselements o.dgl. folgt. Es ist denkbar, dass die Positionsfehlerkenngröße des Roboters von der den Roboter umgebenden Umgebung, beispielsweise einer Anzahl an voneinander unterscheidbaren Objekten innerhalb der Umgebung, und/oder von Sichtverhältnissen abhängt. Insbesondere werden/wird der Fehler des ermittelten Distanzparameters des Roboters, der Fehler des zur Ermittlung der zurückgelegten Strecke herangezogenen Distanzumrechnungsparameters und/oder die Positionsfehlerkenngröße in der Steuer- und/oder Regeleinheit hinterlegt. Insbesondere ist die Steuer- und/oder Regeleinheit dazu eingerichtet, für jede, insbesondere translatorische, Bewegung des Roboters eine Positionsfehlerkenngröße zu ermitteln, welche insbesondere eine durch die Bewegung bedingte Unsicherheit einer Position des Roboters beschreibt. Beispielsweise beträgt ein Fehler des über die Steuer- und/oder Regeleinheit aus den zumindest zwei Bildern ermittelten Drehwinkels zumindest im Wesentlichen $0{,}5 \cdot 10^{-9}°$ bis $3 \cdot 10^{-9}°$.

Des Weiteren wird vorgeschlagen, dass in zumindest einem Verfahrensschritt mittels der Steuer- und/oder Regeleinheit und der Steuerungs- und/oder Antriebseinheit bei einer Überschreitung eines Grenzwerts der ermittelten Positionsfehlerkenngröße zumindest eine Kalibrationsbewegung des Roboters zur Bestimmung des Distanzumrechnungsparameters erfolgt. Es kann eine vorteilhaft gleichbleibende Genauigkeit einer Ermittlung der vom Roboter zurückgelegten Strecke ermöglicht werden, insbesondere da sichergestellt werden kann, dass der Distanzumrechnungsparameter in Abhängigkeit von der Positionsfehlerkenngröße bedarfsweise neu bestimmt wird. Bevorzugt wird mittels der Steuer- und/oder Regeleinheit bei einer Überschreitung des Grenzwerts der ermittelten Positionsfehlerkenngröße, insbesondere während eines regulären Betriebs, die Steuerungs- und/oder Antriebseinheit zu einer Ausführung einer Kalibrationsbewegung angesteuert. Insbesondere wird ein regulärer Betrieb des Roboters, insbesondere zum Ausführen der Tätigkeit des Roboters, bei einer Überschreitung des Grenzwerts der ermittelten Positionsfehlerkenngröße unterbrochen, um die Kalibrationsbewegung auszuführen. Alternativ oder zusätzlich ist denkbar, dass eine, insbesondere spezifische, Tätigkeit des Roboters bei einer Überschreitung des Grenzwerts der ermittelten Positionsfehlerkenngröße vor einem Ausführen der Kalibrationsbewegung beendet wird. Beispielsweise wird eine in einem regulären Betrieb vorgesehene Bewegung des Roboters vor dem Ausführen der Kalibrationsbewegung ausgeführt und/oder vor dem Ausführen der Kalibrationsbewegung eine stabile Position eingenommen. Insbesondere wird der Grenzwert der ermittelten Positionsfehlerkenngröße in der Steuer- und/oder Regeleinheit hinterlegt. Es ist denkbar, dass die Steuer- und/oder Regeleinheit zumindest einen weiteren Grenzwert der Positionsfehlerkenngröße umfasst. Vorzugsweise wird bei einer Überschreitung des weiteren Grenzwerts der Positionsfehlerkenngröße mittels der Steuer- und/oder Regeleinheit eine Ansteuerung der Steuerungs- und/oder Antriebseinheit zu einem Ausführen von Kalibrationsbewegungen zumindest zeitweise deaktiviert. Insbesondere kann dadurch bei einer fehlerhaften Erfassung der Erfassungseinheit, bei schlechten Sichtverhältnissen und/oder bei einem anders gearteten Fehler des Roboters, insbesondere der Steuer- und/oder Regeleinheit, ein ungewollt häufiges Wiederholen von Kalibrationsbewegungen verhindert und vorteilhaft ein regulärer Betrieb des Roboters und/oder eine Ausführung einer Tätigkeit durch den Roboter sichergestellt werden.

Zudem wird vorgeschlagen, dass in zumindest einem Verfahrensschritt die Kalibrationsbewegung des Roboters zur Bestimmung des Distanzumrechnungsparameters als eine Drehung zumindest der Erfassungseinheit um die Rotationsachse ausgebildet ist, wobei ein maximaler Drehwinkel der Kalibrationsbewegung, insbesondere der Erfassungseinheit um die Rotationsachse, mittels der Steuer- und/oder Regeleinheit in Abhängigkeit von einem ermittelten Bildauswerteparameter relativ zu einem vor oder bei einem Beginn der Kalibrationsbewegung erfassten Bild eingestellt wird. Es kann vorteilhaft sichergestellt werden, dass die Kalibrationsbewegung ausreichend groß ist, um über erfasste Bilder den Distanzumrechnungsparameter zu bestimmen. Die Kalibrationsbewegung zur Bestimmung des Distanzumrechnungsparameters kann vorteilhaft an eine den Roboter umgebende Umgebung angepasst werden, wobei die Kalibrationsbewegung derart ausgeführt werden kann, dass eine Bestimmung des Distanzumrechnungsparameters möglich ist. Die vom Roboter zurückgelegte Strecke kann vorteilhaft unabhängig von einer den Roboter umgebenden Umgebung ermittelt werden. Der Distanzumrechnungsparameter kann vorteilhaft unabhängig von einer Ausrichtung des Roboters bestimmt werden. Unter einem "Bildauswerteparameter" soll insbesondere ein Parameter verstanden werden, welcher über eine digitale Auswertung eines Bilds, insbesondere eines über die Erfassungseinheit aufgenommenen Bilds, ermittelt wird und insbesondere eine erkennbare Veränderung zu einem anderen aufgenommenen Bild, insbesondere einen optischen Fluss beschreibt. Bevorzugt ist die Steuer- und/oder Regeleinheit und/oder die Erfassungseinheit dazu vorgesehen, den Bildauswerteparameter aus einem über die Erfassungseinheit aufgenommenen Bild und einem vor oder bei einem Beginn der Kalibrationsbewegung erfassten Bild zu ermitteln. Beispielsweise ist der Bildauswerteparameter als ein Vektor eines Pixels im optischen Fluss zwischen den zwei Bildern, als ein Helligkeitsunterschied in einem Pixel oder einem Pixelbereich der Bilder oder als eine andere, dem Fachmann sinnvoll erscheinende Kenngröße zur Unterscheidung der zwei Bilder ausgebildet. Insbesondere ist die Steuer- und/oder Regeleinheit dazu eingerichtet, in Abhängigkeit von zumindest zwei zur Bestimmung des Distanzumrechnungsparameters herangezogenen Bildern, welche insbesondere vor und nach einer Kalibrationsbewegung und/oder der Drehung um den maximalen Drehwinkel aufgenommen sind, zumindest einen Bildauswerteparameter zu ermitteln. Vorzugsweise ist in der Steuer- und/oder Regeleinheit zumindest ein Grenzwert des Bildauswerteparameters hinterlegt. Bevorzugt wird, insbesondere nach einer Ermittlung des zumindest einen Bildauswerteparameters, mittels der Steuer- und/oder Regeleinheit der ermittelte Bildauswerteparameter mit dem Grenzwert des Bildauswerteparameters verglichen. Vorzugsweise wird die Drehbewegung der Erfassungseinheit, insbesondere des Erfassungselements, um die Rotationsachse fortgesetzt, falls der ermittelte Bildauswerteparameter den Grenzwert des Bildauswerteparameters unterschreitet. Bevorzugt wird die Drehbewegung der Erfassungseinheit, insbesondere des Erfassungselements, um die Rotationsachse mittels der Steuer- und/oder Regeleinheit bei dem maximalen Drehwinkel beendet, falls der ermittelte Bildauswerteparameter dem Grenzwert des Bildauswerteparameters entspricht oder diesen überschreitet. Insbesondere gibt der Grenzwert des Bildauswerteparameters einen Wert des Bildauswerteparameters an, bei dem ein Unterschied zwischen zwei aufgenommenen Bildern, für die der Bildauswerteparameter ermittelt wurde, groß genug ist, um einen von der Erfassungseinheit, insbesondere des Erfassungselements, bei der Bewegung der Erfassungseinheit, insbesondere des Erfassungselements, um die während der Bewegung feststehende Rotationsachse um die Rotationsachse überstreichenden Drehwinkel, insbesondere mit einer ausreichend hohen Genauigkeit, zu ermitteln und/oder um den Distanzumrechnungsparameter, insbesondere mit einer ausreichend hohen Genauigkeit, zu bestimmen. Insbesondere erfolgt der Vergleich des ermittelten Bildauswerteparameters mit dem Grenzwert des Bildauswerteparameters während der Drehbewegung der Erfassungseinheit, insbesondere des Erfassungselements, um die Rotationsachse und/oder während der Kalibrationsbewegung. Es ist denkbar, dass der maximale Drehwinkel zur Bestimmung des Distanzumrechnungsparameters mittels der Steuer- und/oder Regeleinheit in zumindest einem Verfahrensschritt ermittelt wird, wobei vorzugsweise bei einer weiteren Kalibrationsbewegung in zumindest einem weiteren Verfahrensschritt der ermittelte maximale Drehwinkel verwendet wird, wobei insbesondere die weitere Kalibrationsbewegung über eine Drehung um den maximalen Drehwinkel um die Rotationsachse erfolgt. Alternativ oder zusätzlich ist denkbar, dass mittels der Steuer- und/oder Regeleinheit ein Verhältnis zwischen dem ermittelten Bildauswerteparameter und dem Grenzwert des Bildauswerteparameters, insbesondere unabhängig von Kalibrationsbewegungen, periodisch ermittelt wird, wobei lediglich bei einer Unterschreitung des Grenzwerts oder einer Unterschreitung eines Grenzwerts für das Verhältnis zwischen dem ermittelten Bildauswerteparameter und dem Grenzwert des Bildauswerteparameters eine, insbesondere erneute, Ermittlung des maximalen Drehwinkels erfolgt. Insbesondere erfolgt bei einer Ermittlung des maximalen Drehwinkels bei einer Kalibrationsbewegung mittels der Steuer- und/oder Regeleinheit für zumindest einen Drehwinkel eine Ermittlung des Bildauswerteparameters und ein Vergleich des ermittelten Bildauswerteparameters mit dem Grenzwert des Bildauswerteparameters, insbesondere für mehr als einen Drehwinkel zumindest solange, bis der ermittelte Bildauswerteparameter dem Grenzwert des Bildauswerteparameters entspricht oder diesen überschreitet.

Ferner wird vorgeschlagen, dass in zumindest einem Verfahrensschritt mittels einer externen Einheit und/oder einer Bedienungseinheit des Roboters eine Häufigkeit einer Bestimmung des Distanzumrechnungsparameters und/oder eine Häufigkeit einer über die Steuer- und/oder Regeleinheit ausgeführten Kalibrationsbewegung des Roboters zur Bestimmung des Distanzumrechnungsparameters eingestellt wird. Es kann eine vorteilhaft benutzer- und/oder anwendungsspezifische Ermittlung der vom Roboter zurückgelegten Strecke ermöglicht werden. Insbesondere kann über die Einstellung der Häufigkeit der Bestimmung des Distanzumrechnungsparameters und/oder der Häufigkeit der Kalibrationsbewegung eine benötigte Genauigkeit der ermittelten, vom Roboter zurückgelegten Strecke eingestellt werden. Insbesondere kann ein Benutzer oder ein System, insbesondere bei einer Steuerung des Roboters zur Bestimmung des Distanzumrechnungsparameters, über die Einstellung der Häufigkeit der Bestimmung des Distanzumrechnungsparameters und/oder der Häufigkeit der Kalibrationsbewegung eine Zeit anpassen, die der Roboter für Kalibrationsbewegungen aufwenden kann/darf, wodurch insbesondere eine Betriebszeit des Roboters im regulären Betrieb eingestellt werden kann. Vorzugsweise ist die Bedienungseinheit als ein Tastenfeld, als ein Touch-Display, als ein Mikrofon, insbesondere zu einer Sprachsteuerung, o. dgl. ausgebildet. Es ist denkbar, dass der Roboter eine Kommunikationseinheit umfasst, insbesondere zu einer bevorzugt drahtlosen Datenübertragung mit der externen Einheit. Bevorzugt ist die externe Einheit als ein Smartphone, als ein Server, insbesondere eines Smart-Home-Systems o. dgl., als eine Fernbedienung, als ein anderer Roboter o. dgl. ausgebildet. Insbesondere ist die externe Einheit zu einer Fernsteuerung und/oder einer Programmierung des Roboters, insbesondere der Steuer- und/oder Regeleinheit, vorgesehen. Besonders bevorzugt ist die Häufigkeit einer Bestimmung des Distanzumrechnungsparameters und/oder die Häufigkeit einer über die Steuer- und/oder Regeleinheit ausgeführten Kalibrationsbewegung des Roboters zur Bestimmung des Distanzumrechnungsparameters über ein Einstellen zumindest eines Betriebsparameters und/oder zumindest eines Grenzwerts, welche/welcher in der Steuer- und/oder Regeleinheit hinterlegt ist, einstellbar. Beispielsweise ist die Häufigkeit einer Bestimmung des Distanzumrechnungsparameters und/oder die Häufigkeit einer über die Steuer- und/oder Regeleinheit ausgeführten Kalibrationsbewegung des Roboters zur Bestimmung des Distanzumrechnungsparameters über ein Einstellen des Grenzwerts der Positionsfehlerkenngröße, des Grenzwerts der Bildauswertekenngröße, eines Ansteuerungsparameters der Steuer- und/oder Regeleinheit zu einem Ansteuern der Steuerungs- und/oder Antriebseinheit o. dgl. einstellbar. Alternativ oder zusätzlich ist denkbar, dass mittels der externen Einheit und/oder der Bedienungseinheit des Roboters eine Einstellung des Steuerungs- und/oder Antriebsparameters über die Steuer- und/oder Regeleinheit deaktiviert oder aktiviert wird, wobei insbesondere die Häufigkeit einer Bestimmung des Distanzumrechnungsparameters und/oder die Häufigkeit einer über die Steuer- und/oder Regeleinheit ausgeführten Kalibrationsbewegung des Roboters zur Bestimmung des Distanzumrechnungsparameters eingestellt wird. Insbesondere kann über die Häufigkeit einer Bestimmung des Distanzumrechnungsparameters und/oder die Häufigkeit einer über die Steuer- und/oder Regeleinheit ausgeführten Kalibrationsbewegung des Roboters zur Bestimmung des Distanzumrechnungsparameters ein Anteil einer Zeit eingestellt werden, die sich der Roboter in einem regulären Betrieb befindet und/oder eine Tätigkeit ausführt. Beispielsweise kann bei einem Mähroboter, wobei beispielsweise bei einem Rasenstück eine Position des Roboters weniger genau bestimmt werden muss, durch eine Reduzierung der Häufigkeit einer Bestimmung des Distanzumrechnungsparameters und/oder der Häufigkeit einer über die Steuer- und/oder Regeleinheit ausgeführten Kalibrationsbewegung des Roboters zur Bestimmung des Distanzumrechnungsparameters eine Zeit für einen Mähbetrieb vorteilhaft erhöht werden.

Des Weiteren wird vorgeschlagen, dass in zumindest einem Verfahrensschritt mittels der Steuer- und/oder Regeleinheit in Abhängigkeit von zumindest einem über eine, insbesondere die vorher genannte, Sensoreinheit des Roboters erfassten Umgebungsparameter eine Häufigkeit einer Bestimmung des Distanzumrechnungsparameters und/oder eine Häufigkeit einer über die Steuer- und/oder Regeleinheit ausgeführten Kalibrationsbewegung des Roboters zur Bestimmung des Distanzumrechnungsparameters eingestellt wird. Es können, insbesondere bei einer Steuerung des Roboters in Abhängigkeit von der Positionsfehlerkenngröße, ungewollt häufige Kalibrationsbewegungen bei schlechten, beispielsweise wetterbedingten, Sichtverhältnissen o. dgl. vorteilhaft verhindert werden. Es können, insbesondere bei einer Steuerung des Roboters in Abhängigkeit von dem Bildauswerteparameter, ungewollt große und zeitaufwändige Kalibrationsbewegungen bei schlechten, beispielsweise wetterbedingten, Sichtverhältnissen, bei einer ähnlichen Umgebung, beispielsweise in leeren Räumen, o. dgl. vorteilhaft verhindert werden. Es kann eine vorteilhaft umgebungsspezifische Anpassung eines Verhaltens des Roboters zur Ermittlung der vom Roboter zurückgelegten Strecke ermöglicht werden. Es kann eine vorteilhaft hohe Flexibilität des Roboters hinsichtlich eines Einsatzgebiets und/oder hinsichtlich Umgebungsbedingungen bei einem Betrieb erreicht werden. Bevorzugt erfolgt über eine Einstellung der Häufigkeit einer Bestimmung des Distanzumrechnungsparameters und/oder der Häufigkeit einer über die Steuer- und/oder Regeleinheit ausgeführten Kalibrationsbewegung des Roboters zur Bestimmung des Distanzumrechnungsparameters mittels der Steuer- und/oder Regeleinheit über den Umgebungsparameter eine umgebungsspezifische Steuerung des Roboters und/oder eine Anpassung eines Bewegungsverhaltens des Roboters auf die den Roboter umgebende Umgebung.

Insbesondere wird zumindest ein Grenzwert des Umgebungsparameters in der Steuer- und/oder Regeleinheit hinterlegt, wobei insbesondere bei einer Überschreitung oder einer Unterschreitung des Grenzwerts des Umgebungsparameters durch einen erfassten Umgebungsparameter eine Einstellung der Häufigkeit einer Bestimmung des Distanzumrechnungsparameters und/oder der Häufigkeit einer über die Steuer- und/oder Regeleinheit ausgeführten Kalibrationsbewegung des Roboters zur Bestimmung des Distanzumrechnungsparameters erfolgt. Es ist denkbar, dass mittels der Sensoreinheit eine Vielzahl von voneinander verschieden ausgebildeten Umgebungsparametern erfasst werden, wobei vorzugsweise für jeden Umgebungsparameter zumindest ein Grenzwert des Umgebungsparameters in der Steuer- und/oder Regeleinheit hinterlegt ist. Beispielsweise wird bei einer Erfassung eines Wertes von einem als Regenzustand ausgebildeten Umgebungsparameter, wobei insbesondere von einer erschwerten Bildauswertung durch schlechtere Sichtverhältnisse ausgegangen werden kann, welcher einen Grenzwert des als Regenzustand ausgebildeten Umgebungsparameters überschreitet, der hinterlegte Grenzwert der Positionsfehlerkenngröße eingestellt, insbesondere um die Häufigkeit einer Bestimmung des Distanzumrechnungsparameters und/oder die Häufigkeit einer über die Steuer- und/oder Regeleinheit ausgeführten Kalibrationsbewegung des Roboters zur Bestimmung des Distanzumrechnungsparameters einzustellen. Insbesondere kann somit eine erhöhte Häufigkeit einer Bestimmung des Distanzumrechnungsparameters und/oder Häufigkeit einer über die Steuer- und/oder Regeleinheit ausgeführten Kalibrationsbewegung des Roboters zur Bestimmung des Distanzumrechnungsparameters durch eine erhöhte Positionsfehlerkenngröße bei den erschwerten Sichtverhältnissen verhindert werden, wodurch sonst eine Verzögerung einer Tätigkeit des Roboters entstehen würde. In einer weiteren beispielhaften Ausgestaltung wird mittels der Sensoreinheit, insbesondere des Umgebungsparameters, eine Annäherung eines Objekts, beispielsweise eines weiteren Roboters, erfasst, wobei mittels der Steuer- und/oder Regeleinheit eine Kalibrationsbewegung zumindest zeitweise ausgesetzt wird, insbesondere um eine Kollision des Roboters mit dem Objekt zu verhindern. Alternativ oder zusätzlich ist denkbar, dass mittels der Steuer- und/oder Regeleinheit in Abhängigkeit von dem erfassten Umgebungsparameter, beispielsweise bei einem starken Regenfall oder bei einem Feuer in der den Roboter umgebenden Umgebung, ein Notsteuerprotokoll des Roboters aktiviert wird, wobei der Roboter vorzugsweise in eine geschützte Position, wie beispielsweise auf einen sicheren Untergrund oder in eine Ladestation, bewegt wird und ein Ausführen einer Kalibrationsbewegung zumindest zeitweise deaktiviert wird.

Zudem wird vorgeschlagen, dass in zumindest einem Verfahrensschritt, insbesondere vor einer Inbetriebnahme des Roboters, mittels eines Benutzers, mittels einer externen Einheit und/oder mittels der Steuer- und/oder Regeleinheit zumindest eine Position der Erfassungseinheit relativ zu der Rotationsachse bestimmt und zu einer Bestimmung des Distanzumrechnungsparameters in einer Speichereinheit der Steuer- und/oder Regeleinheit hinterlegt wird. Es kann eine vorteilhaft geringe benötigte Rechenleistung der Steuer- und/oder Regeleinheit bei einer Ermittlung der zurückgelegten Strecke erreicht werden, insbesondere da diese durch ein Festsetzen eines Abstandsvektors der Erfassungseinheit zur Rotationsachse über lediglich eine erfasste Variable ermittelt werden kann. Es kann eine vorteilhaft flexible Ausgestaltung des Roboters hinsichtlich einer Position der Erfassungseinheit ermöglicht werden. Es kann eine variable Positionierung der Erfassungseinheit während eines Betriebs ermöglicht werden, beispielsweise an einem Arm des Roboters o. dgl., insbesondere da die Position der Erfassungseinheit relativ zur Rotationsachse zur Bestimmung des Distanzumrechnungsparameters bzw. zur Ermittlung der vom Roboter zurückgelegten Strecke angepasst werden kann. Vorzugsweise wird die Position der Erfassungseinheit relativ zu der Rotationsachse bei einer Herstellung und/oder bei einer Montage des Roboters bestimmt und in der Steuer- und/oder Regeleinheit hinterlegt. Vorzugsweise wird die hinterlegte Position der Erfassungseinheit relativ zu der Rotationsachse mittels der Steuer- und/oder Regeleinheit zu einer Bestimmung des Distanzumrechnungsparameters herangezogen, wobei insbesondere der Distanzumrechnungsparameter in Abhängigkeit von der Position der Erfassungseinheit relativ zur Rotationsachse und von dem bei einer Kalibrationsbewegung und/oder bei einer Drehung der Erfassungseinheit um die Rotationsachse zur Bestimmung des Distanzumrechnungsparameters überstrichenen Drehwinkels bestimmt wird. Alternativ oder zusätzlich ist denkbar, dass die Position der Erfassungseinheit relativ zu der Rotationsachse bei oder vor einer Bestimmung des Distanzumrechnungsparameters ermittelt wird, insbesondere mittels der Steuer- und/oder Regeleinheit und der Steuerungs- und/oder Antriebseinheit und/oder der Sensoreinheit. Insbesondere ist denkbar, dass die Erfassungseinheit, insbesondere das Erfassungselement, relativ zur Rotationsachse bewegbar ist, beispielsweise über einen Roboterarm o.dgl., wobei insbesondere die Steuerungs- und/oder Antriebseinheit und die Steuer- und/oder Regeleinheit dazu vorgesehen sind, über eine Auslenkung von Motoren der Steuerungs- und/oder Antriebseinheit zur Bewegung der Erfassungseinheit, insbesondere des Erfassungselements, die Position der Erfassungseinheit relativ zur Rotationsachse zu ermitteln und/oder wobei die Sensoreinheit dazu vorgesehen ist, insbesondere über ein weiteres Sensorelement, die Position der Erfassungseinheit relativ zur Rotationsachse zu erfassen.

Der erfindungsgemäße Roboter und/oder das erfindungsgemäße Verfahren sollen/soll hierbei nicht auf die oben beschriebene Anwendung und Ausführungsform beschränkt sein. Insbesondere können/kann der erfindungsgemäße Roboter und/oder das erfindungsgemäße Verfahren zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

Zeichnungen

Weitere Vorteile ergeben sich aus der folgenden Zeichnungsbeschreibung. In den Zeichnungen sind zwei Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:

Fig. 1   eine perspektivische Darstellung eines erfindungsgemäßen Roboters zu einer Durchführung eines erfindungsgemäßen Verfahrens zu einer Ermittlung einer von dem Roboter zurückgelegten Strecke, wobei der Roboter als ein Mähroboter ausgebildet ist,

Fig. 2   a) eine schematische Draufsicht des erfindungsgemäßen Roboters mit einer monokularen Erfassungseinheit,

b) eine schematische Seitenansicht des erfindungsgemäßen Roboters mit der monokularen Erfassungseinheit,

Fig. 3   a) eine schematische Darstellung einer Bewegung des erfindungsgemäßen Roboters relativ zu einem Objekt,

b) eine schematische Darstellung einer Kalibrationsbewegung des erfindungsgemäßen Roboters während einer Bewegung, c) eine schematische Darstellung einer Bewegung des erfindungsgemäßen Roboters nach der Kalibrationsbewegung, wobei erfasste Entfernungen und Abstände mittels eines über die Kalibrationsbewegung bestimmten Distanzumrechnungsparameters ermittelt wurden,

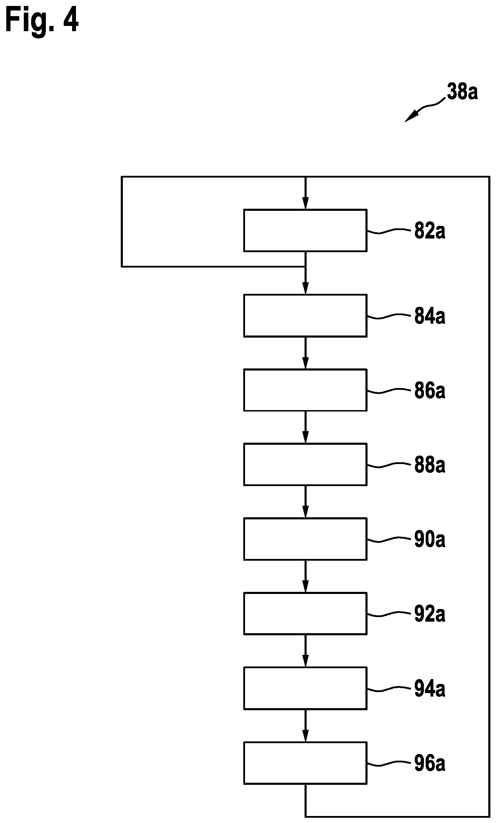

Fig. 4   eine schematische Darstellung eines beispielhaften Ablaufs des erfindungsgemäßen Verfahrens zur Ermittlung einer von dem erfindungsgemäßen Roboter zurückgelegten Strecke,

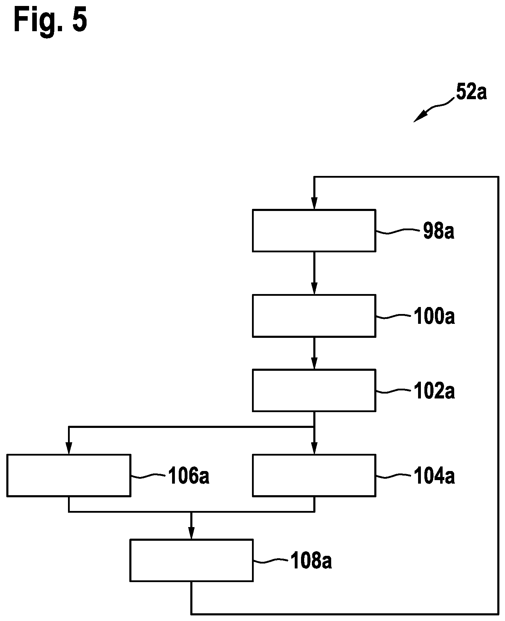

Fig. 5   eine schematische Darstellung eines über eine Steuer- und/oder Regeleinheit des erfindungsgemäßen Roboters ausgeführten Algorithmus zur Ermittlung der von dem Roboter zurückgelegten Strecke,

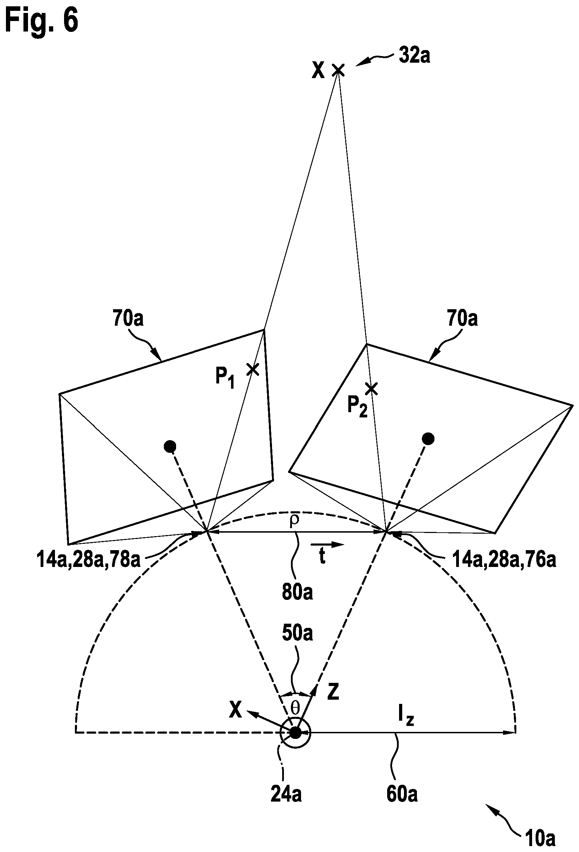

Fig. 6   eine beispielhafte Darstellung einer Kalibrationsbewegung, wobei ein um eine Rotationsachse der Kalibrationsbewegung überstreichender Drehwinkel ermittelt wird,

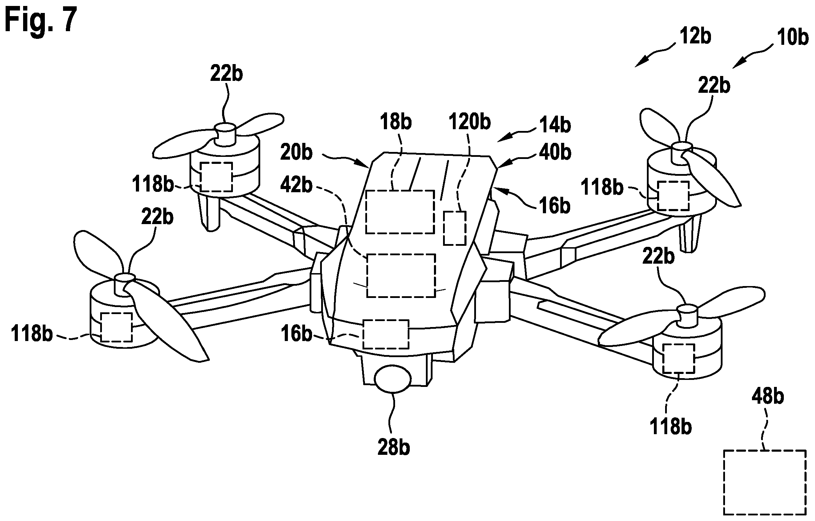

Fig. 7   eine perspektivische Ansicht einer alternativen Ausgestaltung eines erfindungsgemäßen Roboters zu einer Durchführung eines erfindungsgemäßen Verfahrens zu einer Ermittlung einer von dem Roboter zurückgelegten Strecke, wobei der Roboter als eine flugfähige Drohne ausgebildet ist und

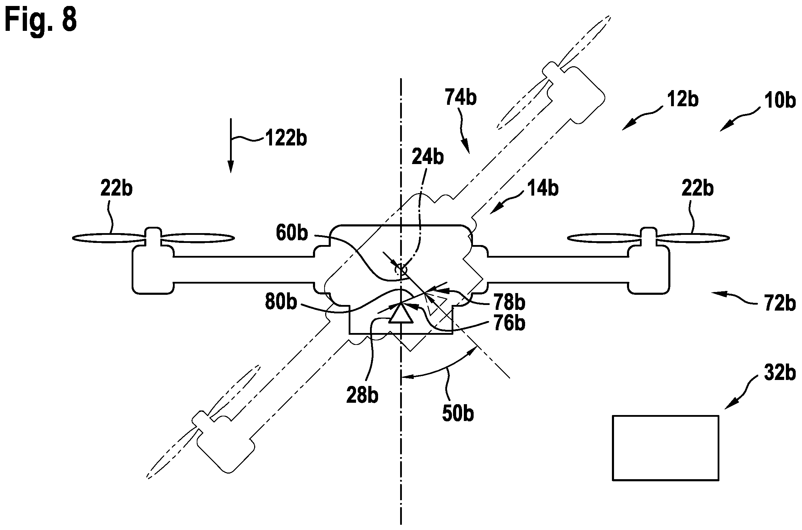

Fig. 8   eine schematische Darstellung einer beispielhaften Kalibrationsbewegung der alternativen Ausgestaltung des erfindungsgemäßen Roboters um eine Rotationsachse, welche horizontal verläuft.

Beschreibung der Ausführungsbeispiele

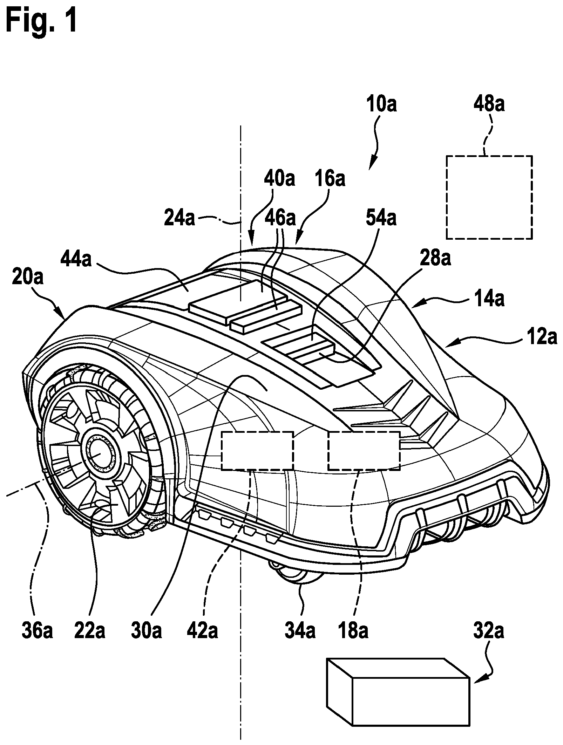

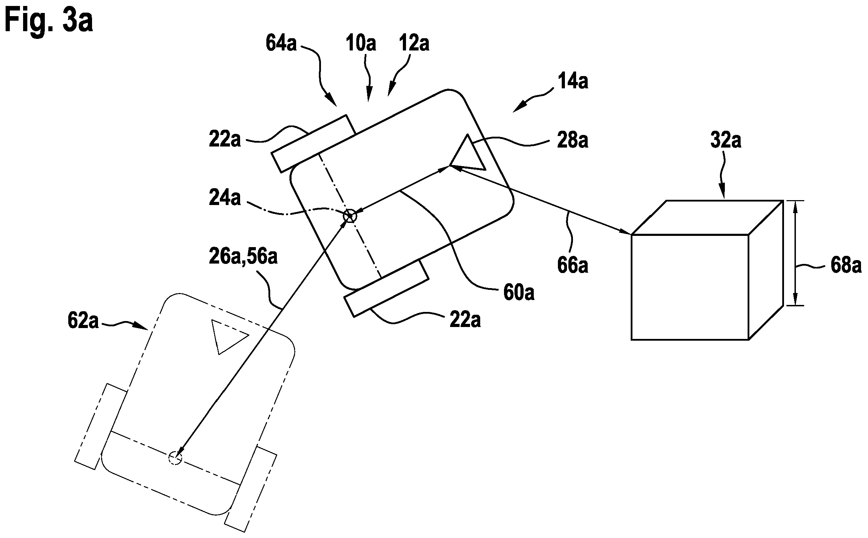

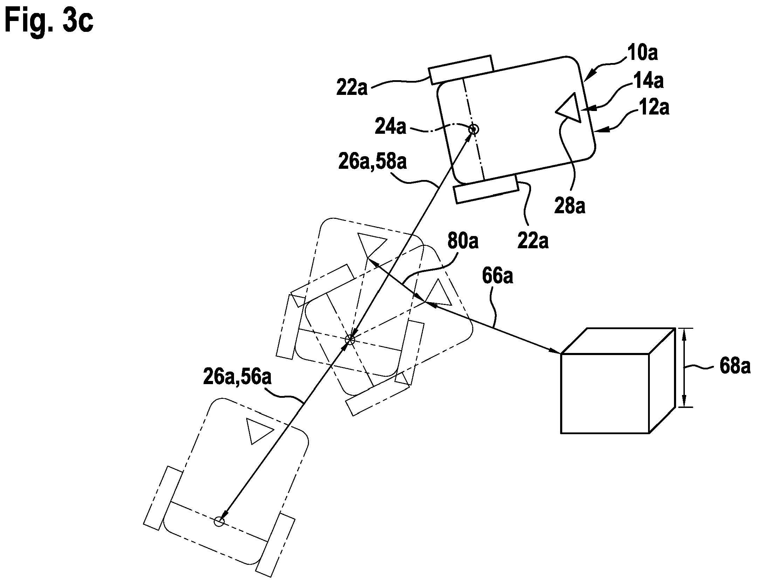

In Figur 1 ist ein als ein Mähroboter ausgebildeter Roboter 10a gezeigt, welcher insbesondere teilautonom ausgebildet ist. Der Roboter 10a ist als ein fahrbarer Roboter ausgebildet. Es sind auch andere Ausgestaltungen des Roboters 10a denkbar, beispielsweise als ein Saugroboter oder ein anders gearteter Reinigungsroboter, als eine Überwachungs-Drohne, als ein Transportroboter o. dgl. und/oder als ein vollautonomer Roboter. Der Roboter 10a umfasst eine Steuerungs- und/oder Antriebseinheit 12a, eine monokulare Erfassungseinheit 14a, eine Sensoreinheit 16a, eine Steuer- und/oder Regeleinheit 18a und ein Gehäuse 20a. Der Roboter 10a umfasst zwei angetriebene Fortbewegungsmittel 22a, welche insbesondere als Räder ausgebildet sind. Die zwei Fortbewegungsmittel 22a sind dazu vorgesehen, zumindest die Erfassungseinheit 14a um eine Rotationsachse 24a, welche in einer relativ zur Erfassungseinheit 14a festgesetzten Position angeordnet ist, zu drehen, wobei die Erfassungseinheit 14a und die Rotationsachse 24a beabstandet voneinander angeordnet sind. Es sind auch andere Ausgestaltungen der Fortbewegungsmittel 22a denkbar, beispielsweise als Walzen, als Rollen zu einem Antreiben von Gleisketten oder als Rotoren. Die Steuer- und/oder Regeleinheit 18a ist zu einer Ermittlung einer von dem Roboter 10a zurückgelegten Strecke 26a eingerichtet (siehe Figuren 3a und 3c). Die Erfassungseinheit 14a umfasst genau ein als monokulare Kamera ausgebildetes Erfassungselement 28a, welches insbesondere zumindest teilweise an einer Außenwand 30a des Gehäuses 20a angeordnet ist. Vorzugsweise ist die Erfassungseinheit 14a, insbesondere das Erfassungselement 28a, dazu vorgesehen, eine den Roboter 10a umgebende Umgebung und/oder Objekte 32a in der den Roboter 10a umgebenden Umgebung zu erfassen. Insbesondere ist die Sensoreinheit 16a an der Außenwand 30a des Gehäuses 20a angeordnet.

Die Steuer- und/oder Regeleinheit 18a und die Steuerungs- und/oder Antriebseinheit 12a sind zumindest größtenteils innerhalb des Gehäuses 20a angeordnet und/oder von dem Gehäuse 20a umschlossen. Insbesondere sind die zwei angetriebenen Fortbewegungsmittel 22a als Teil der Steuerungs- und/oder Antriebseinheit 12a ausgebildet. Die Steuerungs- und/oder Antriebseinheit 12a umfasst zwei weitere Fortbewegungsmittel 34a, welche insbesondere um eine vertikale Achse drehbar sind und insbesondere nicht angetrieben ausgebildet sind. Die zwei angetriebenen Fortbewegungsmittel 22a sind koaxial zueinander angeordnet und differentiell antreibbar. Die Rotationsachse 24a schneidet eine gemeinsame Drehachse 36a der zwei angetriebenen Fortbewegungsmittel 22a zumindest im Wesentlichen in einem Punkt, insbesondere einem Mittelpunkt der Drehachse 36a. Die Rotationsachse 24a ist zumindest im Wesentlichen senkrecht zu einer Horizontalen angeordnet, die insbesondere die Drehachse 36a der zwei Fortbewegungsmittel 22a umfasst. Vorzugsweise sind die zwei angetriebenen Fortbewegungsmittel 22a als Steuermittel ausgebildet, wobei eine Lenkung des Roboters 10a über eine differentielle Ansteuerung der zwei Fortbewegungsmittel 22a erfolgt. Bevorzugt sind die zwei Fortbewegungsmittel 22a derart ansteuerbar, dass sich der Roboter 10a zumindest im Wesentlichen auf einer Stelle um die Rotationsachse 24a dreht. Der Roboter 10a ist zu einer Durchführung eines Verfahrens 38a zu einer Ermittlung einer von dem Roboter 10a zurückgelegten Strecke 26a vorgesehen.

Die Erfassungseinheit 14a, insbesondere das Erfassungselement 28a, und die Sensoreinheit 16a sind an einer Oberseite des Gehäuses 20a angeordnet. Der Roboter 10a umfasst eine Bedienungseinheit 40a und eine Kommunikationseinheit 42a. Die Bedienungseinheit 40a umfasst ein Display 44a und eine Mehrzahl von Tasten 46a, welche insbesondere an der Oberseite des Gehäuses 20a angeordnet sind. Die Kommunikationseinheit 42a ist zu einer drahtlosen Übertragung von elektronischen Daten mit einer externen Einheit 48a vorgesehen, beispielsweise einem Smartphone, einem Server, einem anderen Roboter, einem Computer o. dgl. Insbesondere ist die Kommunikationseinheit 42a zu einer Funk-Verbindung beispielsweise mit der externen Einheit 48a vorgesehen. Es sind aber auch andere Ausgestaltungen der Bedienungseinheit 40a und/oder der Kommunikationseinheit 42a denkbar. Der Roboter 10a umfasst insbesondere eine Energiespeichereinheit (in den Figuren nicht gezeigt), welche insbesondere als ein wiederaufladbarer Akku ausgebildet ist. Es sind aber auch andere Ausgestaltungen der Energiespeichereinheit denkbar. Der Roboter 10a ist in einem regulären Betrieb vorzugsweise zu einem Mähbetrieb vorgesehen, wobei insbesondere mittels eines Bearbeitungswerkzeugs des Roboters 10a (in Figuren nicht gezeigt) Pflanzen auf einem vom Roboter 10a überfahrenen Untergrund geschnitten werden.

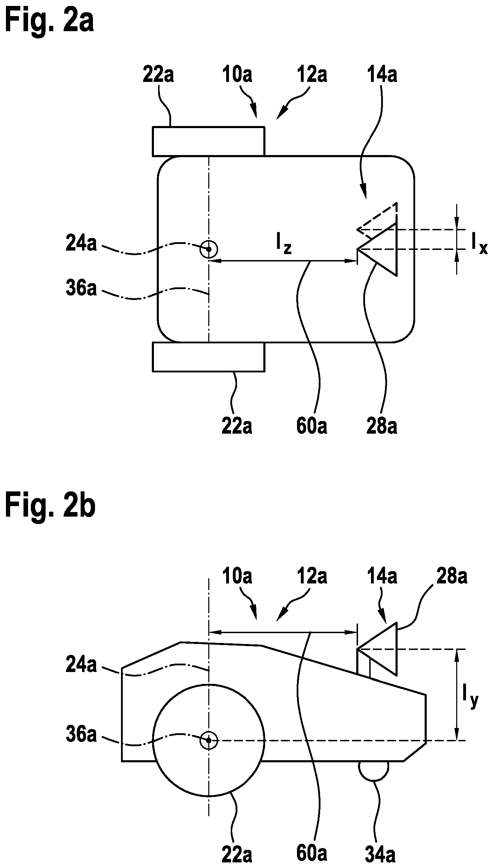

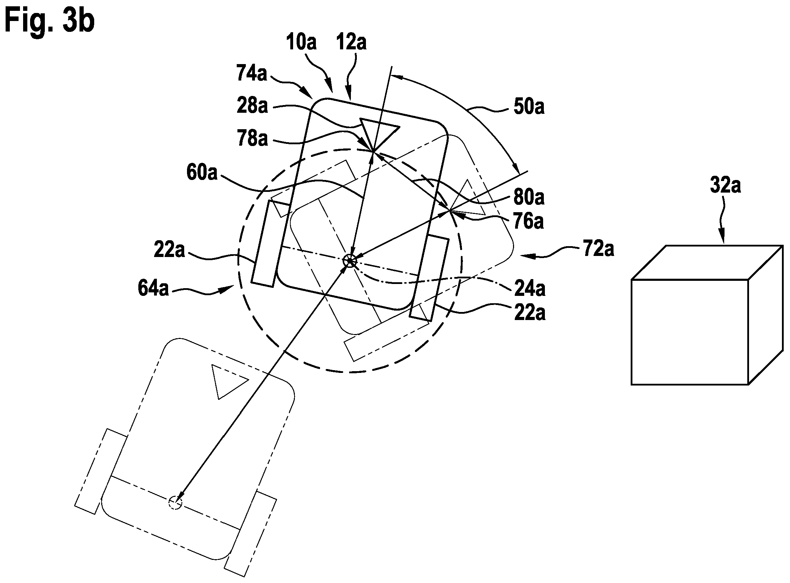

Die Steuer- und/oder Regeleinheit 18a ist dazu eingerichtet, in Abhängigkeit von einer Bewegung der Erfassungseinheit 14a um die während der Bewegung feststehende Rotationsachse 24a, welche in einem bekannten Abstand 60a (vgl. bspw. Figur 2) zur Rotationsachse 24a und in einer bekannten Ausrichtung relativ zur Rotationsachse 24a angeordnet ist, einen Distanzumrechnungsparameter zu bestimmen, welcher zur Ermittlung der vom Roboter 10a zurückgelegten Strecke 26a vorgesehen ist. Vorzugsweise ist die Steuer- und/oder Regeleinheit 18a dazu eingerichtet, ausschließlich in Abhängigkeit von über die Erfassungseinheit 14a, insbesondere das Erfassungselement 28a, erfassten Daten, vorzugsweise unabhängig von der Sensoreinheit 16a und/oder Sensorelementen, den Distanzumrechnungsparameter zu bestimmen und die vom Roboter 10a zurückgelegte Strecke 26a zu ermitteln. Die Steuer- und/oder Regeleinheit 18a ist dazu eingerichtet, den Distanzumrechnungsparameter in Abhängigkeit von einem von der Erfassungseinheit 14a, insbesondere dem Erfassungselement 28a, bei der Bewegung der Erfassungseinheit 14a, insbesondere des Erfassungselements 28a, um die während der Bewegung feststehende Rotationsachse 24a überstrichenen Drehwinkel 50a um die Rotationsachse 24a (vgl. Figuren 3a, 3b und 3c sowie Figur 6), welcher insbesondere über ein Verfahren der Epipolargeometrie aus einem Bild vor der Bewegung um die Rotationsachse 24a und einem anderen Bild nach der Bewegung um die Rotationsachse 24a ermittelt wird, und in Abhängigkeit von einer Position der Erfassungseinheit 14a, insbesondere des Erfassungselements 28a, relativ zur Rotationsachse 24a zu bestimmen (vgl. Figur 3b).

Die Steuerungs- und/oder Antriebseinheit 12a ist zu einer Fortbewegung des Roboters 10a vorgesehen, wobei die Steuer- und/oder Regeleinheit 18a dazu eingerichtet ist, zu einer Bestimmung des Distanzumrechnungsparameters zumindest einen Steuerungs- und/oder Antriebsparameter der Steuerungs- und/oder Antriebseinheit 12a, insbesondere zu einem Ausführen einer Kalibrationsbewegung, einzustellen. Die Steuerungs- und/oder Antriebseinheit 12a umfasst zwei Motoren, insbesondere Elektromotoren (in den Figuren nicht gezeigt), wobei jedes der zwei Fortbewegungsmittel 22a jeweils über einen der Motoren antreibbar ist. Der Steuerungs- und/oder Antriebsparameter ist vorzugsweise als eine auf eines der zwei Fortbewegungsmittel 22a zu übertragende Antriebskraft und/oder eine Richtung der zu übertragenden Antriebskraft ausgebildet. Vorzugsweise ist die Steuer- und/oder Regeleinheit 18a dazu eingerichtet, den Roboter 10a über eine Einstellung des Steuerungs- und/oder Antriebsparameters fortzubewegen und/oder zu drehen, insbesondere um die Rotationsachse 24a zu drehen. Die zwei weiteren Fortbewegungsmittel 34a sind insbesondere nicht angetrieben und frei um eine Drehachse drehbar, wobei die Drehachse der weiteren Fortbewegungsmittel 34a zumindest im Wesentlichen parallel zur Rotationsachse 24a und/oder vertikal zu einem Untergrund angeordnet ist.

Die Steuer- und/oder Regeleinheit 18a ist dazu eingerichtet, mittels einer Auswertung von zwei über die Erfassungseinheit 14a zeitlich versetzt zueinander aufgenommenen Bildern einen, insbesondere betrachtungsspezifischen, Distanzparameter zu ermitteln und den ermittelten Distanzparameter über den bestimmten Distanzumrechnungsparameter zur Ermittlung der, insbesondere zwischen zwei Erfassungszeitpunkten der zwei Bilder, zurückgelegten Strecke 26a zu skalieren (siehe auch Figuren 3a bis 3c). Insbesondere ist der Distanzparameter dimensionslos ausgebildet oder weist eine von einer metrischen Einheit verschiedene Einheit auf. Insbesondere ist die Erfassungseinheit 14a dazu vorgesehen, kontinuierlich oder periodisch, insbesondere mit einer Frequenz von zumindest im Wesentlichen 60 Hz, Bilder der den Roboter 10a umgebenden Umgebung und/oder Objekten 32a innerhalb der den Roboter 10a umgebenden Umgebung aufzunehmen. Bevorzugt ist die Steuer- und/oder Regeleinheit 18a dazu eingerichtet, den zumindest einen Distanzparameter über ein Verfahren der Epipolargeometrie aus den zwei zeitlich versetzt zueinander aufgenommenen Bildern zu ermitteln (vgl. auch Figur 6). Die Steuer- und/oder Regeleinheit 18a weist einen Algorithmus 52a zu einer Bestimmung des Distanzumrechnungsparameters auf (vgl. Figur 5) und ist dazu eingerichtet, den Algorithmus 52a, insbesondere bei einem regulären Betrieb des Roboters 10a, kontinuierlich oder periodisch auszuführen. Der Algorithmus 52a ist zusätzlich zu einer Ermittlung der von dem Roboter 10a zurückgelegten Strecke 26a vorgesehen, welche insbesondere in Abhängigkeit von dem Distanzumrechnungsparameter und dem ermittelten Distanzparameter ermittelt wird.

Insbesondere umfasst die Sensoreinheit 16a ein als ein Regensensor ausgebildetes Sensorelement 54a, welches dazu vorgesehen ist, einen als Regenzustand ausgebildeten Umgebungsparameter zu erfassen. Es sind aber auch andere Ausgestaltungen der Sensoreinheit 16a, insbesondere des Sensorelements 54a, denkbar, beispielsweise als ein Annäherungssensor, als ein odometrischer Sensor, als ein Positionserkennungssensor o. dgl.

In den Figuren 2a und 2b ist eine Anordnung der Erfassungseinheit 14a, insbesondere des Erfassungselements 28a, relativ zu der Rotationsachse 24a in einer Draufsicht und einer Seitenansicht gezeigt. Die Erfassungseinheit 14a, insbesondere das Erfassungselement 28a, ist in einem minimalen Abstand $I_z$ von einer über die Drehachse 36a der zwei angetriebenen Fortbewegungsmittel 22a und die Rotationsachse 24a aufgespannte Ebene angeordnet, welcher insbesondere dem minimalen Abstand 60a der Erfassungseinheit 14a, insbesondere des Erfassungselements 28a, und der Rotationsachse 24a entspricht. Die Erfassungseinheit 14a, insbesondere das Erfassungselement 28a, ist auf einer die Rotationsachse 24a umfassenden und die Drehachse 36a senkrecht schneidenden Ebene angeordnet. Es ist aber auch denkbar, dass die Erfassungseinheit 14a, insbesondere das Erfassungselement 28a, in einen minimalen Abstand $I_x$ von der die Rotationsachse 24a umfassenden und die Drehachse 36a senkrecht schneidenden Ebene angeordnet ist, was insbesondere in der Figur 2a angedeutet ist. Die Erfassungseinheit 14a, insbesondere das Erfassungselement 28a, ist in einem minimalen Abstand $I_y$ von einer die Drehachse 36a umfassenden und die Rotationsachse 24a senkrecht schneidenden Ebene angeordnet. Die Position der Erfassungseinheit 14a, insbesondere des Erfassungselements 28a, relativ zur Rotationsachse 24a ist durch die Abstände $I_z$, $I_x$ und $I_y$ gegeben. Die Position der Erfassungseinheit 14a, insbesondere des Erfassungselements 28a, relativ zur Rotationsachse 24a ist über die Abstände $I_z$, $I_x$ und $I_y$ in der Steuer- und/oder Regeleinheit 18a hinterlegt.

In den Figuren 3a, 3b und 3c ist schrittweise eine Bewegung des Roboters 10a gezeigt, wobei nach einer ersten Fortbewegungsstrecke 56a eine Kalibrationsbewegung des Roboters 10a zur Bestimmung des Distanzumrechnungsparameters erfolgt, bevor der Roboter 10a sich auf einer zweiten Fortbewegungsstrecke 58a weiterbewegt. Insbesondere werden mittels der Steuer- und/oder Regeleinheit 18a über den in der Kalibrationsbewegung bestimmten Distanzumrechnungsparameter erfasste und ermittelte Distanzparameter skaliert und/oder in Meter umgerechnet, wobei vorzugsweise vom Roboter 10a zurückgelegte Strecken 26a ermittelt werden. Insbesondere sind in den Figuren 3a, 3b und 3c Bewegungen des Roboters 10a jeweils zweidimensional in einer Ebene dargestellt. Es sind jedoch auch beliebige Bewegungen des Roboters 10a im dreidimensionalen Raum denkbar, bevorzugt auch zur Bestimmung des Distanzumrechnungsparameters, wobei insbesondere die Bewegung der Erfassungseinheit 14a in einem bekannten gleichbleibenden Abstand 60a zur Rotationsachse 24a um die Rotationsachse 24a zur Bestimmung des Distanzumrechnungsparameters innerhalb einer Ebene erfolgt. Beispielsweise ist eine Kalibrationsbewegung des Roboters 10a auch an einem Abhang denkbar, wobei die Ebene, in welcher die Kalibrationsbewegung erfolgt, und die Rotationsachse 24a zumindest im Wesentlichen geneigt zu einer Horizontalen ausgerichtet sind.

In Figur 3a ist der Roboter 10a nach einem Zurücklegen der ersten Fortbewegungsstrecke 56a gezeigt. Über ein Bild, welches über die Erfassungseinheit 14a vor einem Zurücklegen der ersten Fortbewegungsstrecke 56a, insbesondere an einer Position 62a, aufgenommen wurde, und ein weiteres Bild, welches über die Erfassungseinheit 14a nach einem Zurücklegen der ersten Fortbewegungsstrecke 58a, insbesondere an einer Position 64a, aufgenommen wurde, werden mittels der Steuer- und/oder Regeleinheit 18a über ein Verfahren der Epipolargeometrie mehrere Distanzparameter ermittelt, welche insbesondere als die vom Roboter 10a zurückgelegte erste Fortbewegungsstrecke 56a, als Abstand 66a der Erfassungseinheit 14a, insbesondere des Erfassungselements 28a, zu einem Objekt 32a und als Abmessung 68a des Objekts 32a ausgebildet sind. Die hier beschriebene Ausgestaltung ist beispielhaft beschrieben. Es sind alternativ oder zusätzlich auch viele weitere Ausgestaltungen der Fortbewegungsstrecken 56a, 58a und/oder der Distanzparameter denkbar. Durch die zwei über die monokulare Erfassungseinheit 14a aufgenommenen Bilder, insbesondere das Bild und das weitere Bild, ist es nicht möglich, die zurückgelegte Strecke 26a und/oder einen der anderen Distanzparameter in metrischen Einheiten, insbesondere in Meter, anzugeben, insbesondere da über das Verfahren der Epipolargeometrie mittels zwei in unterschiedlichen Positionen 62a, 64a aufgenommenen Bildern keine Skalierung der Distanzen 56a, 58a und/oder Abmessung 68a möglich ist.

In Figur 3b ist der Roboter 10a an der Position 64a nach der Kalibrationsbewegung zur Bestimmung des Distanzumrechnungsparameters gezeigt, wobei sich der Roboter 10a vorzugsweise an der Position 64a auf der Stelle um die Rotationsachse 24a gedreht hat. Die Kalibrationsbewegung ist als eine Bewegung der Erfassungseinheit 14a um die während der Bewegung feststehende Rotationsachse 24a in dem bekannten Abstand 60a zur Rotationsachse 24a ausgebildet, wobei die Erfassungseinheit 14a, insbesondere das Erfassungselement 28a, hinsichtlich einer Ausrichtung, insbesondere eines Erfassungsbereichs 70a und/oder einer Hauptbetrachtungsrichtung der Erfassungseinheit 14a (siehe Figur 6), um die Rotationsachse 24a gedreht wird. Die Erfassungseinheit 14a überstreicht bei der Kalibrationsbewegung/der Bewegung um die Rotationsachse 24a den Drehwinkel 50a, welcher vorzugsweise mittels der Steuer- und/oder Regeleinheit 18a über ein vor der Kalibrationsbewegung über die Erfassungseinheit 14a, insbesondere in einer Stellung 72a des Roboters 10a, aufgenommenes Bild und ein nach der Kalibrationsbewegung über die Erfassungseinheit 14a, insbesondere in einer weiteren Stellung 74a des Roboters 10a, aufgenommenes weiteres Bild durch ein Verfahren der Epipolargeometrie ermittelt wird (vgl. Figur 6). Der Distanzumrechnungsparameter ist als eine Distanz 80a einer Position 76a der Erfassungseinheit 14a, insbesondere des Erfassungselements 28a, in der Stellung 72a des Roboters 10a vor der Kalibrationsbewegung und einer anderen Position 78a der Erfassungseinheit 14a, insbesondere des Erfassungselements 28a, in der weiteren Stellung 74a des Roboters 10a nach der Kalibrationsbewegung ausgebildet. Mittels der Steuer- und/oder Regeleinheit 18a wird der Distanzumrechnungsparameter über eine trigonometrische Rechnung aus dem Drehwinkel 50a und der Position der Erfassungseinheit 14a, insbesondere des Erfassungselements 28a, relativ zur Rotationsachse 24a bestimmt, insbesondere berechnet. Über ein Verfahren der Epipolargeometrie wird die Distanz 80a einer Position der Erfassungseinheit 14a, insbesondere des Erfassungselements 28a, in der Stellung des Roboters 10a vor der Kalibrationsbewegung und einer Position der Erfassungseinheit 14a, insbesondere des Erfassungselements 28a, in der weiteren Stellung des Roboters 10a nach der Kalibrationsbewegung ebenso mittels der Steuer- und/oder Regeleinheit 18a über ein vor der Kalibrationsbewegung aufgenommenes Bild und ein nach der Kalibrationsbewegung aufgenommenes weiteres Bild dimensionslos oder in einer von einer metrischen Einheit verschiedenen Einheit ermittelt. Durch den Distanzumrechnungsparameter sind über das Verfahren der Epipolargeometrie ermittelte Distanzen, Abstände und/oder Abmessungen, insbesondere die ermittelten Distanzparameter skalierbar und/oder in metrische Einheiten, insbesondere in Meter, umrechenbar.

In Figur 3c ist der Roboter 10a nach einem Zurücklegen der zweiten Fortbewegungsstrecke 58a nach der Kalibrationsbewegung gezeigt. Über den bestimmten Distanzumrechnungsparameter werden ermittelte Distanzparameter, welche auch die von dem Roboter 10a zurückgelegten Fortbewegungsstrecken 56a, 58a umfassen, mittels der Steuer- und/oder Regeleinheit 18a skaliert und/oder in metrische Einheiten, insbesondere in Meter, umgerechnet. Dadurch ist eine metrische Erfassung der den Roboter 10a umgebenden Umgebung und eine vorteilhaft genaue Ermittlung einer vom Roboter 10a zurückgelegten Strecke 26a ermöglicht.

In der in den Figuren 3a, 3b und 3c gezeigten Fortbewegung des Roboters 10a erfolgt eine Bestimmung des Distanzumrechnungsparameters über ein Ausführen der Kalibrationsbewegung, wobei insbesondere ein regulärer Betrieb, beispielsweise der Mähbetrieb, des Roboters 10a zur Bestimmung des Distanzumrechnungsparameters unterbrochen wird. Es ist auch denkbar, dass eine Bestimmung des Distanzumrechnungsparameters während des regulären Betriebs erfolgt. Insbesondere ist denkbar, dass eine Bestimmung des Distanzumrechnungsparameters mittels der Steuer- und/oder Regeleinheit 18a, insbesondere über den Algorithmus 52a, kontinuierlich oder periodisch jeweils über ein Zeitintervall erfolgt, wobei ein bestimmter Wert des Distanzumrechnungsparameters in Abhängigkeit von einer Bewegung des Roboters 10a, welche innerhalb des Zeitintervalls erfolgt, entweder zur Ermittlung der zurückgelegten Strecke 26a herangezogen oder verworfen wird. Insbesondere wird eine Bewegung des Roboters 10a zwischen zwei zur Bestimmung des Distanzumrechnungsparameters oder zu einer Ermittlung eines Distanzparameters herangezogenen Bildern mittels der Steuer- und/oder Regeleinheit 18a analysiert, wobei in Abhängigkeit von der Bewegung des Roboters in einem Zeitintervall zwischen den zwei Bildern und/oder einem Verhältnis der Bewegung des Roboters in dem Zeitintervall und einem Bewegungsgrenzbereich, welcher insbesondere in der Steuer- und/oder Regeleinheit 18a hinterlegt ist, mittels der Steuer- und/oder Regeleinheit 18a entschieden wird, ob die zwei Bilder zur Bestimmung des Distanzumrechnungsparameters herangezogen werden und/oder ob ein über die zwei Bilder bestimmter Distanzumrechnungsparameter zur Ermittlung einer von dem Roboter 10a zurückgelegten Strecke 26a herangezogen wird oder verworfen wird.

Alternativ zu der in den Figuren 1 bis 3c gezeigten Ausgestaltung des Roboters 10a, insbesondere der Fortbewegung des Roboters 10a bei der Kalibrationsbewegung, ist denkbar, dass der Roboter 10a, insbesondere die zwei Fortbewegungsmittel 22a, dazu vorgesehen ist, zumindest die Erfassungseinheit 14a, insbesondere das Erfassungselement 28a, bei der Kalibrationsbewegung und/oder bei der Bewegung zur Bestimmung des Distanzumrechnungsparameters um eine Rotationsachse 24a zu bewegen, welche außerhalb des Roboters 10a angeordnet ist. Beispielsweise ist denkbar, dass die Fortbewegungsmittel 22a des Roboters 10a derart gesteuert und/oder gelenkt werden, dass sich der Roboter 10a, insbesondere die Erfassungseinheit 14a, in einem Bogen um die Rotationsachse 24a bewegt, wobei ein Abstand der Erfassungseinheit 14a, insbesondere des Erfassungselements 28a, zur Rotationsachse 24a bei der Bewegung über eine Stellung der Fortbewegungsmittel 22a und/oder von Steuermitteln und eine auf die Fortbewegungsmittel 22a übertragene Antriebskraft einstellbar ist und insbesondere ermittelbar oder bekannt ist.

Insbesondere ist denkbar, dass eine Bestimmung des Distanzumrechnungsparameters auch auf einem schiefen Untergrund erfolgen kann, wobei die Bewegung der Erfassungseinheit 14a, insbesondere des Erfassungselements 28a, um die Rotationsachse 24a, insbesondere eine Kalibrationsbewegung, innerhalb einer zu einer Horizontalen geneigten Ebene erfolgt.

In Figur 4 ist ein beispielhafter Ablauf des Verfahrens 38a zur Ermittlung der von dem Roboter 10a zurückgelegten Strecke 26a gezeigt. In einem Verfahrensschritt 82a des Verfahrens 38a, insbesondere vor einer Inbetriebnahme des Roboters 10a, wird mittels eines Benutzers, mittels der externen Einheit 48a und/oder mittels der Steuer- und/oder Regeleinheit 18a zumindest eine Position der Erfassungseinheit 14a relativ zu der Rotationsachse 24a bestimmt und zu einer Bestimmung des Distanzumrechnungsparameters in einer Speichereinheit der Steuer- und/oder Regeleinheit 18a hinterlegt. Alternativ oder zusätzlich ist denkbar, dass die Position der Erfassungseinheit 14a relativ zu der Rotationsachse 24a, insbesondere während eines regulären Betriebs und/oder bei einer beweglichen Erfassungseinheit 14a, mittels der Kommunikationseinheit 42a und/oder mittels der Bedienungseinheit 40a einstellbar und/oder anpassbar ist. Beispielsweise ist denkbar, dass die Position der Erfassungseinheit 14a relativ zu der Rotationsachse 24a mittels einer die Erfassungseinheit 14a bewegenden Aktuatoreinheit des Roboters 10a und/oder mittels eines anderen Sensorelements der Sensoreinheit 16a erfasst und/oder ermittelt wird.

In einem weiteren Verfahrensschritt 84a des Verfahrens 38a wird bei einer Ermittlung einer innerhalb eines Zeitintervalls zurückgelegten Strecke 26a des Roboters 10a mittels der Steuer- und/oder Regeleinheit 18a in Abhängigkeit von einem Fehler eines ermittelten Distanzparameters des Roboters 10a, von einem Fehler des zur Ermittlung der zurückgelegten Strecke 26a herangezogenen Distanzumrechnungsparameters und/oder von einer zu einer innerhalb eines vorherigen Zeitintervalls zurückgelegten Strecke 26a ermittelten Positionsfehlerkenngröße des Roboters 10a zumindest eine Positionsfehlerkenngröße des Roboters 10a ermittelt. In einem weiteren Verfahrensschritt 86a des Verfahrens 38a erfolgt mittels der Steuer- und/oder Regeleinheit 18a und der Steuerungs- und/oder Antriebseinheit 12a bei einer Überschreitung eines Grenzwerts der ermittelten Positionsfehlerkenngröße zumindest eine Kalibrationsbewegung des Roboters 10a zur Bestimmung des Distanzumrechnungsparameters. In einem weiteren Verfahrensschritt 88a des Verfahrens 38a erfolgt mittels der Steuer- und/oder Regeleinheit 18a und der Steuerungs- und/oder Antriebseinheit 12a des Roboters 10a zur Bestimmung des Distanzumrechnungsparameters zumindest eine Kalibrationsbewegung des Roboters 10a, wobei zumindest die Erfassungseinheit 14a in dem bekannten Abstand 60a zur Rotationsachse 24a und in einer bekannten Ausrichtung relativ zur Rotationsachse 24a um die Rotationsachse 24a bewegt wird. Es ist denkbar, dass eine Kalibrationsbewegung des Roboters 10a mittels der Steuer- und/oder Regeleinheit 18a und der Steuerungs- und/oder Antriebseinheit 12a in regelmäßigen zeitlichen Abständen erfolgt.

In einem weiteren Verfahrensschritt 90a des Verfahrens 38a wird mittels der Steuer- und/oder Regeleinheit 18a des Roboters 10a der zumindest eine Distanzumrechnungsparameter in Abhängigkeit von einer Bewegung der Erfassungseinheit 14a um die während der Bewegung feststehende Rotationsachse 24a, insbesondere in dem bekannten Abstand 60a zur Rotationsachse 24a und/oder in einer bekannten Ausrichtung relativ zur Rotationsachse 24a, bestimmt. Insbesondere wird der Distanzumrechnungsparameter nach und/oder während der Kalibrationsbewegung bestimmt. Besonders bevorzugt wird der Distanzumrechnungsparameter mittels der Steuer- und/oder Regeleinheit 18a in Abhängigkeit von der ermittelten und/oder hinterlegten Position der Erfassungseinheit 14a, insbesondere des Erfassungselements 28a, relativ zur Rotationsachse 24a der Kalibrationsbewegung und in Abhängigkeit von dem bei der Kalibrationsbewegung von der Erfassungseinheit 14a, insbesondere dem Erfassungselement 28a, überstrichenen Drehwinkel 50a um die Rotationsachse 24a bestimmt. Wie bereits zu den Figuren 3a, 3b und 3c beschrieben, ist denkbar, dass eine Bestimmung des Distanzumrechnungsparameters mittels der Steuer- und/oder Regeleinheit 18a, insbesondere über den Algorithmus 52a, kontinuierlich oder periodisch jeweils über ein Zeitintervall erfolgt, wobei ein bestimmter Wert des Distanzumrechnungsparameters in Abhängigkeit von einer Bewegung des Roboters 10a, welche innerhalb des Zeitintervalls erfolgt, entweder zur Ermittlung der zurückgelegten Strecke 26a herangezogen oder verworfen wird. In einem Verfahrensschritt des Verfahrens 38a, insbesondere dem Verfahrensschritt 90a, wobei die Kalibrationsbewegung des Roboters 10a zur Bestimmung des Distanzumrechnungsparameters als eine Drehung zumindest der Erfassungseinheit 14a um die Rotationsachse 24a ausgebildet ist, wird ein maximaler Drehwinkel 50a der Kalibrationsbewegung, insbesondere der Erfassungseinheit 14a um die Rotationsachse 24a, mittels der Steuer- und/oder Regeleinheit 18a in Abhängigkeit von einem ermittelten Bildauswerteparameter relativ zu einem vor oder bei einem Beginn der Kalibrationsbewegung erfassten Bild eingestellt.

In einem weiteren Verfahrensschritt 92a des Verfahrens 38a wird die zurückgelegte Strecke 26a des Roboters 10a in Abhängigkeit von dem bestimmten Distanzumrechnungsparameter ermittelt. Insbesondere wird die von dem Roboter 10a zurückgelegte Strecke 26a über eine Skalierung eines ermittelten als eine zurückgelegte über ein Verfahren der Epipolargeometrie ermittelte Distanz 80a des Roboters 10a ausgebildeten Distanzparameters mittels des Distanzumrechnungsparameters ermittelt. Vorzugsweise wird eine von dem Roboter 10a zurückgelegte Strecke 26a während des regulären Betriebs des Roboters 10a über einen, insbesondere zuletzt, bestimmten Distanzumrechnungsparameter kontinuierlich oder periodisch in Abhängigkeit von einem während des regulären Betriebs über ein Verfahren der Epipolargeometrie ermittelten Distanzparameter ermittelt. Vorzugsweise erfolgt eine Bestimmung des Distanzumrechnungsparameters in regelmäßigen zeitlichen Abständen während eines Betriebs des Roboters 10a, insbesondere abhängig von der ermittelten Positionsfehlerkenngröße. Es ist aber auch denkbar, dass eine Bestimmung des Distanzumrechnungsparameters, insbesondere unabhängig von der Positionsfehlerkenngröße, in regelmäßigen zeitlichen Abständen erfolgt, welche insbesondere in der Steuer- und/oder Regeleinheit 18a hinterlegt sind und/oder über die externe Einheit 48a und/oder die Bedienungseinheit 40a einstellbar sind.

In einem weiteren Verfahrensschritt 94a des Verfahrens 38a wird mittels der externen Einheit 48a, insbesondere über die Kommunikationseinheit 42a, und/oder der Bedienungseinheit 40a des Roboters 10a eine Häufigkeit einer Bestimmung des Distanzumrechnungsparameters und/oder eine Häufigkeit von über die Steuer- und/oder Regeleinheit 18a ausgeführten Kalibrationsbewegungen des Roboters 10a zur Bestimmung des Distanzumrechnungsparameters eingestellt. Es ist auch denkbar, dass die Einstellung der Häufigkeit einer Bestimmung des Distanzumrechnungsparameters und/oder der Häufigkeit von über die Steuer- und/oder Regeleinheit 18a ausgeführten Kalibrationsbewegungen des Roboters 10a zur Bestimmung des Distanzumrechnungsparameters bei einer Inbetriebnahme des Roboters 10a und/oder vor einer ersten Bestimmung des Distanzumrechnungsparameters erfolgt. In einem weiteren Verfahrensschritt 96a des Verfahrens 38a wird mittels der Steuer- und/oder Regeleinheit 18a in Abhängigkeit von zumindest einem über eine Sensoreinheit 16a des Roboters 10a erfassten Umgebungsparameter die Häufigkeit einer Bestimmung des Distanzumrechnungsparameters und/oder die Häufigkeit von über die Steuer- und/oder Regeleinheit 18a ausgeführten Kalibrationsbewegungen des Roboters 10a zur Bestimmung des Distanzumrechnungsparameters eingestellt. Beispielsweise wird bei einer Erfassung von starkem Regenfall durch die Sensoreinheit 16a, insbesondere das Sensorelement 54a, ein Grenzwert der Positionsfehlerkenngröße eingestellt, insbesondere erhöht, vorzugsweise um zu häufige Kalibrationsbewegungen des Roboters 10a aufgrund von schlechten Sichtverhältnissen zu verhindern, wobei insbesondere eine notwendige Dauer eines regulären Betriebs, insbesondere des Mähbetriebs, des Roboters 10a sichergestellt werden kann.

Es sind insbesondere auch andere Ausgestaltungen des Verfahrens 38a denkbar, wobei beispielsweise eine Bestimmung des Distanzumrechnungsparameters kontinuierlich während des regulären Betriebs erfolgt.

In Figur 5 ist eine beispielhafte Ausgestaltung des über die Steuer- und/oder Regeleinheit 18a ausführbaren Algorithmus 52a gezeigt, der insbesondere zur Bestimmung des Distanzumrechnungsparameters und zur Ermittlung der von dem Roboter 10a zurückgelegten Strecke 26a vorgesehen ist. Vorzugsweise werden in einem ersten Schritt 98a des Algorithmus 52a, insbesondere während einer Bewegung des Roboters 10a, mittels der Erfassungseinheit 14a, insbesondere dem Erfassungselement 28a, zumindest zwei Bilder zeitlich versetzt voneinander aufgenommen. Bevorzugt ist denkbar, dass zumindest eines der zwei Bilder vor oder nach einer Bewegung des Roboters aufgenommen wird oder ein Bild der zwei Bilder vor einer Bewegung des Roboters 10a aufgenommen wird und ein weiteres Bild der zwei Bilder nach der Bewegung des Roboters 10a aufgenommen wird. Insbesondere wird in einem zweiten Schritt 100a des Algorithmus 52a mittels der Erfassungseinheit 14a und/oder der Steuer- und/oder Regeleinheit 18a ein optischer Fluss der zwei aufgenommenen Bilder bestimmt, wobei insbesondere Unterschiede zwischen den zwei Bildern auf Basis von geänderten Pixeln ermittelt werden. Vorzugsweise wird zumindest ein Punkt ermittelt, welcher von einem ersten der zwei Bilder zu einem zweiten der zwei Bilder eine veränderte Position aufweist. In einem dritten Schritt 102a des Algorithmus 52a wird aus den Positionen des ermittelten Punkts in den zwei Bildern und der bekannten/hinterlegten Position der Erfassungseinheit 14a, insbesondere des Erfassungselements 28a, über ein Verfahren der Epipolargeometrie (siehe auch Figur 6) eine Bewegung des Roboters 10a zwischen den zwei Bildern ermittelt. Insbesondere wird mittels der Steuer-und/oder Regeleinheit 18a in Abhängigkeit von mehreren ermittelten Punkten der zwei Bilder und deren optischen Flusses eine Bewegung des Roboters 10a von dem ersten Bild zu dem zweiten Bild ermittelt, wobei insbesondere ein als von dem Roboter 10a zurückgelegte Strecke 26a ausgebildeter Distanzparameter ermittelt wird. Insbesondere wird in dem dritten Schritt 102a ein Drehwinkel 50a der Erfassungseinheit 14a, insbesondere des Erfassungselements 28a, ermittelt. In einem vierten Schritt 104a des Algorithmus 52a wird, falls die zwischen den zwei Bildern erfolgte Bewegung des Roboters 10a zumindest im Wesentlichen als eine Kalibrationsbewegung erkannt wird/ausgebildet ist, in Abhängigkeit von einem ermittelten Drehwinkel 50a um die Rotationsachse 24a und der hinterlegten Position der Erfassungseinheit 14a, insbesondere des Erfassungselements 28a, um die Rotationsachse 24a der Distanzumrechnungsparameter bestimmt. In einem alternativen vierten Schritt 106a des Algorithmus 52a wird, falls sich die zwischen den zwei Bildern erfolgte Bewegung des Roboters 10a von einer Kalibrationsbewegung bzw. einer Drehbewegung der Erfassungseinheit 14a um die Rotationsachse 24a unterscheidet, der ermittelte Distanzparameter der Bewegung mittels eines vorher bestimmten und insbesondere in der Steuer- und/oder Regeleinheit 18a hinterlegten Distanzumrechnungsparameters skaliert, wobei insbesondere der Distanzparameter in Meter umgerechnet wird. Insbesondere ist der in skalierte/in Meter umgerechnete Distanzparameter als die vom Roboter 10a zwischen den zwei Bildern zurückgelegte Strecke 26a, insbesondere in Metern, ausgebildet. Bevorzugt wird, insbesondere in dem alternativen vierten Schritt 106a des Algorithmus, falls sich die zwischen den zwei Bildern erfolgte Bewegung des Roboters 10a von einer Kalibrationsbewegung bzw. einer Drehbewegung der Erfassungseinheit 14a um die Rotationsachse 24a unterscheidet, mittels der Steuer- und/oder Regeleinheit 18a kein Distanzumrechnungsparameter bestimmt oder ein über die zwei Bilder bestimmter Distanzumrechnungsparameter verworfen. Falls sich der Roboter 10a in einem Zeitraum zwischen den zwei Bildern nicht bewegt hat, erfolgt vorzugsweise keine weitere Tätigkeit der Steuer- und/oder Regeleinheit 18a, wobei insbesondere direkt oder in einem zeitlichen Abstand eine weitere Iteration des Algorithmus 52a, insbesondere beginnend mit dem oben genannten ersten Schritt 98a des Algorithmus 52a, erfolgt. In einem fünften Schritt 108a des Algorithmus 52a wird die ermittelte vom Roboter 10a zurückgelegte Strecke 26a zu einer vorher ermittelten Trajektorie des Roboters 10a hinzugefügt und/oder eine Trajektorie des Roboters 10a von einem Startpunkt des Roboters 10a erstellt. Bevorzugt wird, insbesondere in dem fünften Schritt 108a oder einem sechsten Schritt des Algorithmus 52a, mittels der Steuer- und/oder Regeleinheit 18a in Abhängigkeit von einer gesamten Trajektorie des Roboters 10a eine, insbesondere dreidimensionale, virtuelle Karte erzeugt und/oder aktualisiert. Es ist denkbar, dass zu einer Erstellung der Trajektorie und/oder der virtuellen Karte Daten, insbesondere zumindest ein Umgebungsparameter, der Sensoreinheit 16a herangezogen wird. Beispielsweise wird, insbesondere in einer Ausgestaltung eines Sensorelements der Sensoreinheit 16a als Annäherungssensor, eine Distanz zu in der den Roboter 10a umgebenden Umgebung angeordneten Objekten 32a zur Erstellung der virtuellen Karte herangezogen. Vorzugsweise wird der Algorithmus 52a periodisch oder kontinuierlich ausgeführt. Insbesondere erfolgt nach dem fünften/sechsten Schritt 108a des Algorithmus 52a direkt oder in einem zeitlichen Abstand eine weitere Iteration des Algorithmus 52a, insbesondere beginnend mit dem oben genannten ersten Schritt 98a des Algorithmus 52a. Beispielsweise ist denkbar, dass das zweite Bild der, insbesondere im ersten Schritt aufgenommenen Bilder in einer nächsten Iteration des Algorithmus 52a zusammen mit einem weiteren aufgenommenen Bild, welches insbesondere über die Erfassungseinheit 14a zeitlich versetzt zu dem zweiten Bild aufgenommen wurde, zu einer Bestimmung des Distanzumrechnungsparameters und/oder zu einer Ermittlung der von dem Roboter 10a zurückgelegten Strecke 26a herangezogen wird.

In Figur 6 ist eine beispielhafte abstrahierte Darstellung einer Kalibrationsbewegung des Roboters 10a mit den Erfassungsbereichen 70a der Erfassungseinheit 14a vor der Kalibrationsbewegung und nach der Kalibrationsbewegung gezeigt. Insbesondere soll an dem in Figur 6 gezeigten Beispiel ein Verfahren der Epipolargeometrie zu einer Ermittlung des während der Kalibrationsbewegung von der Erfassungseinheit 14a überstrichenen Drehwinkels 50a verdeutlicht werden, welcher insbesondere in Figur 6 und der nachfolgenden Beschreibung auch als $\theta$ bezeichnet ist. Die Bewegung der Erfassungseinheit 14a, insbesondere des Erfassungselements 28a, bei der Kalibrationsbewegung kann, insbesondere idealisiert, über den Vektor t mit

$$t = \rho \cdot \begin{bmatrix} \sin\dfrac{\theta}{2} \\ 0 \\ \cos\dfrac{\theta}{2} \end{bmatrix} \qquad (1)$$

beschrieben werden.

Die Rotation der Erfassungseinheit 14a, insbesondere des Erfassungselements 28a, bei der Kalibrationsbewegung kann über die Rotationsmatrix R mit

$$R = \begin{bmatrix} \cos\theta & 0 & \sin\theta \\ 0 & 1 & 0 \\ -\sin\theta & 0 & \cos\theta \end{bmatrix} \qquad (2)$$

beschrieben werden, insbesondere da die Bewegung der Erfassungseinheit 14a, insbesondere des Erfassungselements 28a, innerhalb einer Ebene, welche sich insbesondere senkrecht zur Rotationsachse 24a erstreckt, erfolgt.

Die zur Bestimmung des Distanzumrechnungsparameters herangezogenen Bilder sind in zwei verschiedenen Positionen 62a, 64a der Erfassungseinheit 14a relativ zur Rotationsachse 24a aufgenommen, wodurch die Beziehung der Essentiellen Matrix

$$E = [T]_x R \qquad (3)$$

mit $[T]_x$ als schiefsymmetrische Matrix des Vektors t, welche über

$$[T]_x = \begin{bmatrix} 0 & -t_z & t_y \\ t_z & 0 & -t_x \\ -t_y & t_x & 0 \end{bmatrix} \qquad (4)$$

gegeben ist, lautet.

Die Erfassungseinheit 14a, insbesondere das Erfassungselement 28a, und die Steuer- und/oder Regeleinheit 18a sind dazu vorgesehen, über eine Bewegung zumindest eines betrachteten Punkts X relativ zu den Erfassungsbereichen 70a und/oder der Hauptbetrachtungsrichtung, insbesondere über eine Position des Punkts X in den aufgenommenen Bildern, den Drehwinkel 50a zu ermitteln. Beispielsweise ist der Punkt X als eine Kante eines Objekts 32a oder als ein anderer mittels der Erfassungseinheit 14a erkennbarer Referenzpunkt in der den Roboter 10a umgebenden Umgebung ausgebildet. Insbesondere ist die Erfassungseinheit 14a zu einem Point-based-feature-tracking-Verfahren vorgesehen, wobei insbesondere zumindest ein Punkt X aus einem aufgenommenen Bild ermittelt wird. Bildpunkte des betrachteten Punkts X im globalen Koordinatensystem sind abhängig vom Bild über die Gleichung

$$P_i = \begin{bmatrix} x_i & y_i & z_i \end{bmatrix}^T \qquad (5)$$

gegeben.

Über die Gleichung der Epipolarlinie aus der Epipolargeometrie

$$P_2^T E P_1 = 0 \qquad (6)$$

ergibt sich aus den Gleichungen (2), (3), (4), (5) zusammen mit Gleichung (6):

$$a \cdot \sin\theta + b \cdot \cos\theta = c \qquad (7)$$

, wobei sich die Konstanten a, b und c aus den eingesetzten Werten, insbesondere aus R und t, ergeben und insbesondere hier aus Gründen der Übersichtlichkeit nicht detailliert aufgeführt sind. Aus der Gleichung (7) lässt sich der Drehwinkel $\theta$ (50a) für die Kalibrationsbewegung wie folgt berechnen:

$$\theta = 2n\pi \pm \cos^{-1}\frac{c}{\sqrt{a^2 + b^2}} + \tan^{-1}\frac{a}{b}. \qquad (8)$$

Insbesondere beträgt ein Fehler des derart über die Steuer- und/oder Regeleinheit 18a aus den zumindest zwei Bildern ermittelten Drehwinkels $\theta$ (50a) zumindest im Wesentlichen $0{,}5 \cdot 10^{-9}°$ bis $3 \cdot 10^{-9}°$. Der Distanzumrechnungsparameter, welcher als Distanz 80a der Position 76a der Erfassungseinheit 14a, insbesondere des Erfassungselements 28a, vor der Kalibrationsbewegung, insbesondere an einem Erfassungspunkt des einen der zur Ermittlung des Drehwinkels 50a herangezogenen Bilds, und der weiteren Position 78a der Erfassungseinheit 14a, insbesondere des Erfassungselements 28a, nach der Kalibrationsbewegung, insbesondere an einem Erfassungspunkt des weiteren zur Ermittlung des Drehwinkel 50a herangezogenen Bilds, ausgebildet ist, wird mittels der Steuer- und/oder Regeleinheit 18a über die trigonometrische Gleichung

$$\rho = 2 \cdot l_z \cdot \sin\frac{\theta}{2} \qquad (9)$$

bestimmt, wobei insbesondere $l_z$ der minimale Abstand der Erfassungseinheit 14a, insbesondere des Erfassungselements 28a, zur von der Rotationsachse 24a und der Drehachse 36a der zwei Fortbewegungsmittel 22a aufgespannten Ebene ist (vgl. Figur 2). Die Bestimmung des Distanzumrechnungsparameters ist analog auch für andere Anordnungen der Erfassungseinheit 14a, insbesondere des Erfassungselements 28a, denkbar, wobei insbesondere in Gleichung (8) ein minimaler Abstand der Erfassungseinheit 14a, insbesondere des Erfassungselements 28a, zur Rotationsachse 24a verwendet wird.

In den Figuren 1 bis 6 ist das Verfahren 38a bzw. der Algorithmus 52a zur Ermittlung der von einem Roboter 10a zurückgelegten Strecke 26a für einen als fahrbaren Mähroboter ausgebildeten Roboter 10a beschrieben. Ein derartiges Verfahren 38a bzw. ein derartiger Algorithmus 52a sind/ist für alle einem Fachmann bekannten Arten von bewegbaren Robotern denkbar, unabhängig von einer Art der Fortbewegung, welche insbesondere zu einer Bewegung in einem bekannten Abstand um eine feststehende Rotationsachse innerhalb einer, insbesondere senkrecht zur Rotationsachse ausgerichteten, Ebene vorgesehen sind und welche jeweils eine Erfassungseinheit aufweisen, die beabstandet von der Rotationsachse angeordnet ist. Beispielsweise sind schwimmfähige, flugfähige (siehe Figuren 7 und 8), tauchfähige und/oder schwebende Roboter denkbar, wobei mittels einer Steuer- und/oder Regeleinheit des Roboters über einen, insbesondere während einer Kalibrationsbewegung des Roboters, bestimmten Distanzumrechnungsparameter eine von dem Roboter zurückgelegte Strecke ermittelt wird.

In den Figuren 7 und 8 ist ein weiteres Ausführungsbeispiel der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung des anderen Ausführungsbeispiels, insbesondere der Figu-ren 1 bis 6, verwiesen werden kann. Zur Unterscheidung der Ausführungsbeispiele ist der Buchstabe a den Bezugszeichen des Ausführungsbeispiels in den Figuren 1 bis 6 nachgestellt. In dem Ausführungsbeispiel der Figuren 7 und 8 ist der Buchstabe a durch den Buchstaben b ersetzt.

In Figur 7 ist eine alternative Ausgestaltung eines teilautonomen Roboters 10b gezeigt. Der in den Figuren 7 und 8 dargestellte Roboter 10b weist eine zumindest im Wesentlichen analoge Ausgestaltung zu dem in der Beschreibung der Figuren 1 bis 6 beschriebenen Roboter 10a auf, so dass bezüglich einer Ausgestaltung des in den Figuren 7 und 8 dargestellten Roboters 10b zumindest im Wesentlichen auf die Beschreibung der Figuren 1 bis 6 verwiesen werden kann. Im Unterschied zu dem in der Beschreibung der Figuren 1 bis 6 beschriebenen Roboter 10a ist der in den Figuren 7 und 8 gezeigte Roboter 10b vorzugsweise als eine flugfähige Drohne ausgebildet. Der Roboter 10b umfasst vier als Rotoren ausgebildete angetriebene Fortbewegungsmittel 22b, eine monokulare Erfassungseinheit 14b und eine Steuer- und/oder Regeleinheit 18b zu einer Ermittlung einer von dem Roboter 10b zurückgelegten Strecke 26b. Die vier Fortbewegungsmittel 22b des Roboters 10b sind dazu vorgesehen, zumindest die Erfassungseinheit 14b um eine Rotationsachse 24b (vgl. Figur 8), welche in einer relativ zur Erfassungseinheit 14b festgesetzten Position angeordnet ist, zu drehen, wobei die Erfassungseinheit 14b und die Rotationsachse 24b beabstandet voneinander angeordnet sind. Die Steuer- und/oder Regeleinheit 18b ist dazu eingerichtet, in Abhängigkeit von einer Bewegung der Erfassungseinheit 14b um die während der Bewegung feststehende Rotationsachse 24b, insbesondere in einem bekannten Abstand 60b zur Rotationsachse 24b und/oder in einer bekannten Ausrichtung relativ zur Rotationsachse 24b, einen Distanzumrechnungsparameter zu bestimmen, welcher zur Ermittlung der von dem Roboter 10b zurückgelegten Strecke 26b vorgesehen ist. Der Roboter 10b, insbesondere die Steuer-und/oder Regeleinheit 18b, ist vorzugsweise zur Durchführung eines Verfahrens 38b zu einer Ermittlung einer von dem Roboter 10b zurückgelegten Strecke 26b vorgesehen, welches insbesondere zumindest im Wesentlichen analog zu dem zur Figur 4 beschriebenen Verfahren 38a ausgebildet ist. Vorzugsweise umfasst der Roboter 10b eine Steuerungs- und/oder Antriebseinheit 12b, wobei insbesondere die Fortbewegungsmittel 22b als Teil der Steuerungs- und/oder Antriebseinheit 12b ausgebildet sind. Die Steuerungs- und/oder Antriebseinheit 12b umfasst vier Elektromotoren 118b, welche jeweils zu einem Antrieb eines der Fortbewegungsmittel 22b vorgesehen sind. Bevorzugt sind die vier Fortbewegungsmittel 22b, insbesondere über die Motoren 118b, differentiell antreibbar. Die Steuer-und/oder Regeleinheit 18b ist dazu eingerichtet, zu einer Bestimmung des Distanzumrechnungsparameters zumindest einen Steuerungs- und/oder Antriebsparameter der Steuerungs- und/oder Antriebseinheit 12b, insbesondere der Motoren 118b oder einzelner Motoren 118b, zu einem Ausführen einer Kalibrationsbewegung einzustellen. Alternativ oder zusätzlich ist denkbar, dass die Steuer-und/oder Regeleinheit 18b dazu eingerichtet ist, den Distanzumrechnungsparameter während eines regulären Betriebs des Roboters 10b zu bestimmen, insbesondere kontinuierlich, periodisch oder falls eine Bewegung des Roboters 10b zwischen zwei über die Erfassungseinheit 14b zur Bestimmung des Distanzumrechnungsparameters herangezogen, aufgenommenen Bildern innerhalb eines Bewegungsgrenzbereichs bleibt. Insbesondere ist die Steuer- und/oder Regeleinheit 18b dazu eingerichtet, mittels einer Auswertung von zwei über die Erfassungseinheit 14b zeitlich versetzt zueinander aufgenommenen Bildern einen, insbesondere betrachtungsspezifischen, Distanzparameter zu ermitteln und den ermittelten Distanzparameter über den bestimmten Distanzumrechnungsparameter zur Ermittlung der, insbesondere zwischen zwei Erfassungszeitpunkten der zwei Bilder, zurückgelegten Strecke 26b zu skalieren. Bevorzugt umfasst die Steuer-und/oder Regeleinheit 18b zumindest einen Algorithmus 52b zu einer Bestimmung des Distanzumrechnungsparameters und zu einer Ermittlung der von dem Roboter 10b zurückgelegten Strecke 26b, insbesondere mittels des Distanzumrechnungsparameters. Insbesondere ist der Algorithmus 52b zumindest im Wesentlichen analog zu dem zur Figur 5 beschriebenen Algorithmus 52a ausgebildet. Zusätzlich ist denkbar, dass der Roboter 10b eine Sensoreinheit 16b zu einer Erfassung zumindest eines Umgebungsparameters umfasst. Insbesondere ist ein Sensorelement 120b der Sensoreinheit 16b als ein Windsensor, ein Lagesensor, ein Trägheitssensor o. dgl. ausgebildet.

In Figur 8 ist eine beispielhafte Kalibrationsbewegung des Roboters 10b zur Bestimmung des Distanzumrechnungsparameters gezeigt. Insbesondere ist der Roboter 10b in einer Stellung 72b vor der Kalibrationsbewegung und einer Stellung 74b nach der Kalibrationsbewegung gezeigt. Vorzugsweise verläuft die Rotationsachse 24b durch den Roboter 10b. Es ist aber auch denkbar, dass der Roboter 10b, insbesondere die Fortbewegungsmittel 22b, dazu vorgesehen ist, den Roboter 10b bei der Kalibrationsbewegung/ bei einer Bewegung zur Bestimmung des Distanzumrechnungsparameters um eine beabstandet von dem Roboter 10b verlaufende Rotationsachse 24b zu bewegen, wobei insbesondere die monokulare Erfassungseinheit 14b einen bekannten gleichbleibenden Abstand 60b zur Rotationsachse 24b aufweist, welcher insbesondere in einer Ebene der Kalibrationsbewegung/Bewegung angeordnet ist, und eine bekannte Ausrichtung relativ zur Rotationsachse 24b aufweist. In dem in Figur 8 gezeigten Beispiel ist die Rotationsachse 24b zumindest im Wesentlichen parallel zu einer Längserstreckung des Roboters 10b und/oder zu einer Horizontalen ausgerichtet und umfasst eine Haupterstreckungsachse des Roboters 10b. Es sind aber auch andere Ausgestaltungen der Kalibrationsbewegung des Roboters 10b denkbar, beispielsweise zumindest im Wesentlichen parallel zu einer Lotrichtung 122b, zumindest im Wesentlichen senkrecht zu einer Lotrichtung 122b und der Haupterstreckungsachse des Roboters 10b o.dgl. Insbesondere ist denkbar, dass die Kalibrationsbewegung mittels der Steuer- und/oder Regeleinheit 18b derart ausgeführt wird, dass die Rotationsachse 24b in Abhängigkeit von einer den Roboter 10b umgebenden Umgebung und/oder von Objekten 32b in der den Roboter 10b umgebenden Umgebung ausgerichtet ist. Beispielsweise wird über die Erfassungseinheit 14b und/oder die Sensoreinheit 16b die den Roboter 10b umgebende Umgebung und/oder Objekte 32b in der den Roboter 10b umgebenden Umgebung erfasst und mittels der Steuer- und/oder Regeleinheit 18b eine Kalibrationsbewegung zu einer kollisionsfreien Bestimmung des Distanzumrechnungsparameters ermittelt. Alternativ oder zusätzlich ist denkbar, dass die Kalibrationsbewegung, insbesondere hinsichtlich einer Ausrichtung der Rotationsachse 24b, mittels der Steuer- und/oder Regeleinheit 18b in Abhängigkeit von einem anderen Umgebungsparameter, beispielsweise einer Windstärke und/oder einer Windrichtung, und/oder in Abhängigkeit von einer Tätigkeit des Roboters 10b ermittelt wird.

Alternativ oder zusätzlich ist denkbar, dass der Distanzumrechnungsparameter mittels der Steuer- und/oder Regeleinheit 18b, insbesondere durch eine Kalibrationsbewegung, bei einem Start oder einem Ende einer zumindest teilweise horizontalen Bewegung des Roboters 10b, insbesondere während einem regulären Betrieb des Roboters 10b, bestimmt wird, wobei sich der Roboter 10b insbesondere um eine horizontal ausgerichtete Rotationsachse (in Figur 8 nicht gezeigt), die zumindest im Wesentlichen senkrecht zu einer Bewegungsrichtung der horizontalen Bewegung ausgerichtet ist, neigt. Beispielsweise ist der Roboter 10b dazu vorgesehen, sich bei einer zumindest teilweise horizontalen Bewegung um eine solche Rotationsachse zu neigen um über die beispielsweise als nach oben gerichtete Rotoren ausgebildeten Fortbewegungsmittel 22b des Roboters 10b einen, insbesondere zumindest teilweise horizontal ausgerichteten, Vorwärts- oder Rückwärtsschub zu erzeugen. Dadurch können insbesondere zusätzliche Kalibrationsbewegungen zwischen einem regulären Betrieb des Roboters 10b zur Bestimmung des Distanzumrechnungsparameters entfallen. Bevorzugt wird eine Bewegung des Roboters bei einem Start oder einem Ende der zumindest teilweise horizontalen Bewegung mittels der Steuer- und/oder Regeleinheit 18b mit zumindest einem hinterlegten Bewegungsgrenzbereich verglichen. Falls der Roboter 10b beispielsweise zwischen zwei bei dem Start oder dem Ende der horizontalen Bewegung aufgenommenen Bildern eine vorgegebene, insbesondere translatorisch zurückgelegte, Fortbewegungsstrecke nicht überschreitet und sich zumindest teilweise, insbesondere innerhalb einer Ebene, um die Rotationsachse bewegt, wird mittels der Steuer- und/oder Regeleinheit 18b über die zwei aufgenommenen Bilder der Distanzumrechnungsparameter bestimmt. Insbesondere wird, falls die zwischen den zwei Bildern erfolgte Bewegung des Roboters 10b außerhalb des Bewegungsgrenzbereichs liegt, über die zwei aufgenommenen Bilder kein Distanzumrechnungsparameter bestimmt oder ein über die zwei aufgenommenen Bilder bestimmter Distanzumrechnungsparameter verworfen.

**Patentansprüche**

1.   Roboter, insbesondere teilautonomer Roboter, mit zumindest zwei angetriebenen Fortbewegungsmitteln (22a; 22b), insbesondere Rädern, mit einer monokularen Erfassungseinheit (14a; 14b), wobei die zumindest zwei Fortbewegungsmittel (22a; 22b) dazu vorgesehen sind, zumindest die Erfassungseinheit (14a; 14b) um eine Rotationsachse (24a; 24b), welche in einer relativ zur Erfassungseinheit (14a; 14b) festgesetzten Position angeordnet ist, zu drehen, wobei die Erfassungseinheit (14a; 14b) und die Rotationsachse (24a; 24b) beabstandet voneinander angeordnet sind, und mit zumindest einer Steuer- und/oder Regeleinheit (18a; 18b) zu einer Ermittlung einer zurückgelegten Strecke (26a; 26b), **dadurch gekennzeichnet, dass** die Steuer- und/oder Regeleinheit (18a; 18b) dazu eingerichtet ist, in Abhängigkeit von einer Bewegung der Erfassungseinheit (14a; 14b) um die während der Bewegung feststehende Rotationsachse (24a; 24b), in einem gleichbleibenden bekannten Abstand (60a; 60b) zur Rotationsachse (24a; 24b) und in einer bekannten Ausrichtung relativ zur Rotationsachse (24a; 24b), einen Distanzumrechnungsparameter zu bestimmen, welcher zur Ermittlung der zurückgelegten Strecke (26a; 26b) vorgesehen ist.

2.   Roboter nach Anspruch 1, **dadurch gekennzeichnet, dass** die zumindest zwei angetriebenen Fortbewegungsmittel (22a) koaxial zueinander angeordnet und differentiell antreibbar sind, wobei insbesondere die Rotationsachse (24a) eine gemeinsame Drehachse (36a) der zwei Fortbewegungsmittel (22a) zumindest im Wesentlichen in einem Punkt, insbesondere einem Mittelpunkt der Drehachse (36a), schneidet und insbesondere zumindest im Wesentlichen senkrecht zu einer Horizontalen angeordnet ist.

3. Roboter nach Anspruch 1 oder 2, **gekennzeichnet durch** zumindest eine Steuerungs- und/oder Antriebseinheit (12a; 12b) zu einer Fortbewegung des Roboters (10a; 10b), wobei die Steuer- und/oder Regeleinheit (18a; 18b) dazu eingerichtet ist, zu einer Bestimmung des Distanzumrechnungsparameters zumindest einen Steuerungs- und/oder Antriebsparameter der Steuerungs- und/oder Antriebseinheit (12a; 12b), insbesondere zu einem Ausführen einer Kalibrationsbewegung, einzustellen.

4. Roboter nach einem der vorhergehenden Ansprüche, **dadurch gekennzeichnet, dass** die Steuer- und/oder Regeleinheit (18a; 18b) dazu eingerichtet ist, mittels einer Auswertung von zwei über die Erfassungseinheit (14a; 14b) zeitlich versetzt zueinander aufgenommenen Bildern einen, insbesondere betrachtungsspezifischen, Distanzparameter zu ermitteln und den ermittelten Distanzparameter über den bestimmten Distanzumrechnungsparameter zur Ermittlung der, insbesondere zwischen zwei Erfassungszeitpunkten der zwei Bilder, zurückgelegten Strecke (26a; 26b) zu skalieren.

5. Roboter nach einem der vorhergehenden Ansprüche, **dadurch gekennzeichnet, dass** die Steuer- und/oder Regeleinheit (18a; 18b) zumindest einen Algorithmus (52a; 52b) zu einer Bestimmung des Distanzumrechnungsparameters aufweist und dazu eingerichtet ist, den Algorithmus (52a; 52b), insbesondere bei einem regulären Betrieb des Roboters (10a; 10b), kontinuierlich oder periodisch auszuführen.

6. Verfahren zu einer Ermittlung einer von einem Roboter (10a; 10b), insbesondere einem teilautonomen Roboter, zurückgelegten Strecke (26a; 26b), wobei der Roboter (10a; 10b) zumindest zwei angetriebene Fortbewegungsmittel (22a; 22b), insbesondere Räder, und eine, monokulare, Erfassungseinheit (14a; 14b) umfasst, wobei die zumindest zwei Fortbewegungsmittel (22a; 22b) dazu vorgesehen sind, die Erfassungseinheit (14a; 14b) um eine Rotationsachse (24a; 24b), welche in einer relativ zur Erfassungseinheit (14a; 14b) festgesetzten Position angeordnet ist, zu drehen und wobei die Erfassungseinheit (14a; 14b) und die Rotationsachse (24a; 24b) beabstandet voneinander angeordnet sind, insbesondere eines Roboters (10a; 10b) nach einem der vorhergehenden Ansprüche, **dadurch gekennzeichnet, dass** in zumindest einem Verfahrensschritt (90a) mittels zumindest einer Steuer- und/oder Regeleinheit (18a; 18b) des Roboters (10a; 10b) zumindest ein Distanzumrechnungsparameter in Abhängigkeit von einer Bewegung der Erfassungseinheit (14a; 14b) um die während der Bewegung feststehende Rotationsachse (24a; 24b), in einem gleichbleibenden bekannten Abstand (60a; 60b) zur Rotationsachse (24a; 24b) und in einer bekannten Ausrichtung relativ zur Rotationsachse (24a; 24b), bestimmt wird, wobei in zumindest einem weiteren Verfahrensschritt (92a) die zurückgelegte Strecke (26a; 26b) des Roboters (10a; 10b) in Abhängigkeit von dem bestimmten Distanzumrechnungsparameter ermittelt wird.

7. Verfahren nach Anspruch 6, **dadurch gekennzeichnet, dass** eine Bestimmung des Distanzumrechnungsparameters mittels der Steuer- und/oder Regeleinheit (18a; 18b), insbesondere über einen Algorithmus (52a; 52b), kontinuierlich oder periodisch jeweils über ein Zeitintervall erfolgt, wobei ein bestimmter Wert des Distanzumrechnungsparameters in Abhängigkeit von einer Bewegung des Roboters (10a; 10b), welche innerhalb des Zeitintervalls erfolgt, entweder zur Ermittlung der zurückgelegten Strecke (26a; 26b) herangezogen oder verworfen wird.

8. Verfahren nach Anspruch 6 oder 7, **dadurch gekennzeichnet, dass** in zumindest einem Verfahrensschritt (88a) mittels der Steuer- und/oder Regeleinheit (18a; 18b) und einer Steuerungs- und/oder Antriebseinheit (12a; 12b) des Roboters (10a; 10b) zur Bestimmung des Distanzumrechnungsparameters zumindest eine Kalibrationsbewegung des Roboters (10a; 10b) erfolgt, wobei zumindest die Erfassungseinheit (14a; 14b) in einem bekannten Abstand (60a; 60b) zur Rotationsachse (24a; 24b) und in einer bekannten Ausrichtung relativ zur Rotationsachse (24a; 24b) um die Rotationsachse (24a; 24b) bewegt wird.

9. Verfahren nach einem der Ansprüche 6 bis 8, **dadurch gekennzeichnet, dass** in zumindest einem Verfahrensschritt (84a) bei einer Ermittlung einer innerhalb eines Zeitintervalls zurückgelegten Strecke (26a; 26b) des Roboters (10a; 10b) mittels der Steuer- und/oder Regeleinheit (18a; 18b) in Abhängigkeit von einem Fehler eines ermittelten Distanzparameters des Roboters (10a; 10b), von einem Fehler des zur Ermittlung der zurückgelegten Strecke (26a, 26b) herangezogenen Distanzumrechnungsparameters und/oder von einer zu einer innerhalb eines vorherigen Zeitintervalls zurückgelegten Strecke (26a; 26b) ermittelten Positionsfehlerkenngröße des Roboters (10a; 10b) zumindest eine Positionsfehlerkenngröße des Roboters (10a; 10b) ermittelt wird.

# EP 4 208 764 B1

**10.** Verfahren nach Anspruch 9, **dadurch gekennzeichnet, dass** in zumindest einem Verfahrensschritt (86a) mittels der Steuer- und/oder Regeleinheit (18a; 18b) und der Steuerungs- und/oder Antriebseinheit (12a; 12b) bei einer Überschreitung eines Grenzwerts der ermittelten Positionsfehlerkenngröße zumindest eine Kalibrationsbewegung des Roboters (10a; 10b) zur Bestimmung des Distanzumrechnungsparameters erfolgt.

**11.** Verfahren zumindest nach einem der Ansprüche 8 oder 10, **dadurch gekennzeichnet, dass** in zumindest einem Verfahrensschritt (90a) die Kalibrationsbewegung des Roboters (10a; 10b) zur Bestimmung des Distanzumrechnungsparameters als eine Drehung zumindest der Erfassungseinheit (14a; 14b) um die Rotationsachse (24a; 24b) ausgebildet ist, wobei ein maximaler Drehwinkel (50a; 50b) der Kalibrationsbewegung, insbesondere der Erfassungseinheit (14a; 14b) um die Rotationsachse (24a; 24b), mittels der Steuer- und/oder Regeleinheit (18a; 18b) in Abhängigkeit von einem ermittelten Bildauswerteparameter relativ zu einem vor oder bei einem Beginn der Kalibrationsbewegung erfassten Bild eingestellt wird.

**12.** Verfahren nach einem der Ansprüche 6 bis 11, **dadurch gekennzeichnet, dass** in zumindest einem Verfahrensschritt (94a) mittels einer externen Einheit (48a; 48b) und/oder einer Bedienungseinheit (40a; 40b) des Roboters (10a; 10b) eine Häufigkeit einer Bestimmung des Distanzumrechnungsparameters und/oder eine Häufigkeit einer über die Steuer- und/oder Regeleinheit (18a; 18b) ausgeführten Kalibrationsbewegung des Roboters (10a; 10b) zur Bestimmung des Distanzumrechnungsparameters eingestellt wird.

**13.** Verfahren nach einem der Ansprüche 6 bis 12, **dadurch gekennzeichnet, dass** in zumindest einem Verfahrensschritt (96a) mittels der Steuer- und/oder Regeleinheit (18a; 18b) in Abhängigkeit von zumindest einem über eine Sensoreinheit (16a; 16b) des Roboters (10a; 10b) erfassten Umgebungsparameter eine Häufigkeit einer Bestimmung des Distanzumrechnungsparameters und/oder eine Häufigkeit einer über die Steuer- und/oder Regeleinheit (18a; 18b) ausgeführten Kalibrationsbewegung des Roboters (10a; 10b) zur Bestimmung des Distanzumrechnungsparameters eingestellt wird.

**14.** Verfahren nach einem der Ansprüche 6 bis 13, **dadurch gekennzeichnet, dass** in zumindest einem Verfahrensschritt (82a), insbesondere vor einer Inbetriebnahme des Roboters (10a; 10b), mittels eines Benutzers, mittels einer externen Einheit (48a; 48b) und/oder mittels der Steuer- und/oder Regeleinheit (18a; 18b) zumindest eine Position der Erfassungseinheit (14a; 14b) relativ zu der Rotationsachse (24a; 24b) bestimmt und zu einer Bestimmung des Distanzumrechnungsparameters in einer Speichereinheit der Steuer- und/oder Regeleinheit (18a; 18b) hinterlegt wird.

**Claims**

**1.** Robot, in particular semi-autonomous robot, having at least two driven movement means (22a; 22b), in particular wheels, having a monocular capture unit (14a; 14b), the at least two movement means (22a; 22b) being intended to rotate at least the capture unit (14a; 14b) around an axis of rotation (24a; 24b) arranged in a position that is prescribed relative to the capture unit (14a; 14b), the capture unit (14a; 14b) and the axis of rotation (24a; 24b) being arranged at a distance from one another, and having at least one open-loop and/or closed-loop control unit (18a; 18b) for establishing a distance travelled (26a; 26b), **characterized in that** the open-loop and/or closed-loop control unit (18a; 18b) is configured to take a movement of the capture unit (14a; 14b) around the axis of rotation (24a; 24b), which is stationary during the movement, at a constant known distance (60a; 60b) from the axis of rotation (24a; 24b) and in a known orientation relative to the axis of rotation (24a; 24b), as a basis for determining a distance conversion parameter intended to establish the distance travelled (26a; 26b).

**2.** Robot according to Claim 1, **characterized in that** the at least two driven movement means (22a) are arranged coaxially with respect to one another and are differentially drivable, the axis of rotation (24a) in particular intersecting a common spin axis (36a) of the two movement means (22a) at least substantially at one point, in particular a centre of the spin axis (36a), and in particular being arranged at least substantially perpendicular with respect to a horizontal.

**3.** Robot according to Claim 1 or 2, **characterized by** at least one control and/or drive unit (12a; 12b) for moving the robot (10a; 10b), the open-loop and/or closed-loop control unit (18a; 18b) being configured to determine the distance conversion parameter by adjusting at least one control and/or drive parameter of the control and/or drive unit (12a; 12b), in particular in order to carry out a calibration movement.

**4.** Robot according to one of the preceding claims, **characterized in that** the open-loop and/or closed-loop control unit

24

(18a; 18b) is configured to use an evaluation of two images recorded at staggered times by way of the capture unit (14a; 14b) to establish a, in particular observation-specific, distance parameter and to scale the established distance parameter by way of the determined distance conversion parameter in order to establish the distance travelled (26a; 26b), in particular between two capture times of the two images.

5. Robot according to one of the preceding claims, **characterized in that** the open-loop and/or closed-loop control unit (18a; 18b) has at least one algorithm (52a; 52b) for determining the distance conversion parameter and is configured to execute the algorithm (52a; 52b) continuously or periodically, in particular during normal operation of the robot (10a; 10b).

6. Method for establishing a distance travelled (26a; 26b) by a robot (10a; 10b), in particular a semi-autonomous robot, the robot (10a; 10b) comprising at least two driven movement means (22a; 22b), in particular wheels, and one, monocular, capture unit (14a; 14b), the at least two movement means (22a; 22b) being intended to rotate the capture unit (14a; 14b) around an axis of rotation (24a; 24b) arranged in a position that is prescribed relative to the capture unit (14a; 14b), and the capture unit (14a; 14b) and the axis of rotation (24a; 24b) being arranged at a distance from one another, in particular a robot (10a; 10b) according to one of the preceding claims, **characterized in that** at least one method step (90a) involves at least one open-loop and/or closed-loop control unit (18a; 18b) of the robot (10a; 10b) being used to determine at least one distance conversion parameter on the basis of a movement of the capture unit (14a; 14b) around the axis of rotation (24a; 24b), which is stationary during the movement, at a constant known distance (60a; 60b) from the axis of rotation (24a; 24b) and in a known orientation relative to the axis of rotation (24a; 24b), at least one further method step (92a) involving the distance travelled (26a; 26b) of the robot (10a; 10b) being established on the basis of the determined distance conversion parameter.

7. Method according to Claim 6, **characterized in that** the distance conversion parameter is determined continuously or periodically by means of the open-loop and/or closed-loop control unit (18a; 18b), in particular by way of an algorithm (52a; 52b), over a respective time interval, a determined value of the distance conversion parameter either being used to establish the distance travelled (26a; 26b) or being discarded, depending on a movement of the robot (10a; 10b) that takes place within the time interval.

8. Method according to Claim 6 or 7, **characterized in that** at least one method step (88a) involves the open-loop and/or closed-loop control unit (18a; 18b) and a control and/or drive unit (12a; 12b) of the robot (10a; 10b) being used to determine the distance conversion parameter by performing at least one calibration movement of the robot (10a; 10b), at least the capture unit (14a; 14b) being moved around the axis of rotation (24a; 24b) at a known distance (60a; 60b) from the axis of rotation (24a; 24b) and in a known orientation relative to the axis of rotation (24a; 24b).

9. Method according to one of Claims 6 to 8, **characterized in that** at least one method step (84a), when establishing a distance travelled (26a; 26b) of the robot (10a; 10b) within a time interval, involves the open-loop and/or closed-loop control unit (18a; 18b) being used to take an error in an established distance parameter of the robot (10a; 10b), an error in the distance conversion parameter used for establishing the distance travelled (26a; 26b) and/or a position error characteristic of the robot (10a; 10b) established for a distance travelled (26a; 26b) within a previous time interval as a basis for establishing at least one position error characteristic of the robot (10a, 10b).

10. Method according to Claim 9, **characterized in that** at least one method step (86a) involves the open-loop and/or closed-loop control unit (18a; 18b) and the control and/or drive unit (12a; 12b) being used to perform at least one calibration movement of the robot (10a; 10b) for determining the distance conversion parameter when a limit value of the established position error characteristic is exceeded.

11. Method according to at least either of Claims 8 and 10, **characterized in that** at least one method step (90a) involves the calibration movement of the robot (10a; 10b) for determining the distance conversion parameter being in the form of a rotation of at least the capture unit (14a; 14b) around the axis of rotation (24a; 24b), a maximum rotation angle (50a; 50b) of the calibration movement, in particular of the capture unit (14a; 14b), around the axis of rotation (24a; 24b) being adjusted by means of the open-loop and/or closed-loop control unit (18a; 18b) on the basis of an established image evaluation parameter relative to an image captured before or at the beginning of the calibration movement.

12. Method according to one of Claims 6 to 11, **characterized in that** at least one method step (94a) involves an external unit (48a; 48b) and/or an operating unit (40a; 40b) of the robot (10a; 10b) being used to adjust a regularity with which the distance conversion parameter is determined and/or a regularity of a calibration movement of the robot (10a; 10b) carried out by way of the open-loop and/or closed-loop control unit (18a; 18b) to determine the distance conversion parameter.

13. Method according to one of Claims 6 to 12, **characterized in that** at least one method step (96a) involves the open-loop and/or closed-loop control unit (18a; 18b) being used to take at least one environmental parameter captured by way of a sensor unit (16a; 16b) of the robot (10a; 10b) as a basis for adjusting a regularity with which the distance conversion parameter is determined and/or a regularity of a calibration movement of the robot (10a; 10b) carried out by way of the open-loop and/or closed-loop control unit (18a; 18b) to determine the distance conversion parameter.

14. Method according to one of Claims 6 to 13, **characterized in that** at least one method step (82a), in particular before the robot (10a; 10b) is commissioned, involves a user, an external unit (48a; 48b) and/or the open-loop and/or closed-loop control unit (18a; 18b) being used to determine at least one position of the capture unit (14a; 14b) relative to the axis of rotation (24a; 24b) and to store said position in a storage unit of the open-loop and/or closed-loop control unit (18a; 18b) in order to determine the distance conversion parameter.

## Revendications

1. Robot, en particulier robot semi-autonome, comprenant au moins deux moyens de déplacement entraînés (22a ; 22b), en particulier des roues, et une unité de détection monoculaire (14a ; 14b), lesdits au moins deux moyens de déplacement (22a ; 22b) étant prévus pour faire tourner au moins l'unité de détection (14a ; 14b) autour d'un axe de rotation (24a ; 24b) qui est agencé dans une position fixe par rapport à l'unité de détection (14a ; 14b), l'unité de détection (14a ; 14b) et l'axe de rotation (24a ; 24b) étant agencés à distance l'un de l'autre, et comprenant au moins une unité (18a ; 18b) de commande et/ou de régulation pour déterminer une distance parcourue (26a ; 26b), **caractérisé en ce que** l'unité (18a ; 18b) de commande et/ou de régulation est conçue pour, en fonction d'un mouvement de l'unité de détection (14a ; 14b) autour de l'axe de rotation (24a ; 24b) fixe pendant le mouvement, à une distance connue constante (60a ; 60b) par rapport à l'axe de rotation (24a ; 24b) et dans une orientation connue par rapport à l'axe de rotation (24a ; 24b), déterminer un paramètre de conversion de distance qui est prévu pour déterminer la distance parcourue (26a ; 26b).

2. Robot selon la revendication 1, **caractérisé en ce que** lesdits au moins deux moyens de déplacement entraînés (22a) sont agencés coaxialement l'un par rapport à l'autre et sont aptes à être entraînés de manière différentielle, l'axe de rotation (24a) coupant en particulier un axe de rotation commun (36a) des deux moyens de déplacement (22a) au moins essentiellement en un point, en particulier un point central de l'axe de rotation (36a), et étant notamment agencé au moins essentiellement perpendiculairement à une horizontale.

3. Robot selon la revendication 1 ou la revendication 2, **caractérisé par** au moins une unité (12a ; 12b) de commande et/ou d'entraînement pour un déplacement du robot (10a ; 10b), l'unité (18a ; 18b) de commande et/ou de régulation étant conçue pour régler au moins un paramètre de commande et/ou d'entraînement de l'unité (12a ; 12b) de commande et/ou d'entraînement, en particulier pour exécuter un mouvement d'étalonnage, afin de déterminer le paramètre de conversion de distance.

4. Robot selon l'une des revendications précédentes, **caractérisé en ce que** l'unité (18a ; 18b) de commande et/ou de régulation est conçue pour déterminer un paramètre de distance, notamment un paramètre spécifique à l'observation, au moyen d'une évaluation de deux images enregistrées par l'unité de détection (14a ; 14b) de manière décalée dans le temps l'une par rapport à l'autre, et pour mettre à l'échelle le paramètre de distance déterminé au moyen du paramètre de conversion de distance déterminé afin de déterminer la distance (26a ; 26b) parcourue, notamment entre deux instants d'acquisition des deux images.

5. Robot selon l'une des revendications précédentes, **caractérisé en ce que** l'unité (18a ; 18b) de commande et/ou de régulation comprend au moins un algorithme (52a ; 52b) pour déterminer le paramètre de conversion de distance et est conçue pour exécuter l'algorithme (52a ; 52b), en particulier pendant un fonctionnement normal du robot (10a ; 10b), de manière continue ou périodique.

6. Procédé pour déterminer une distance (26a ; 26b) parcourue par un robot (10a ; 10b), en particulier un robot semi-autonome, le robot (10a ; 10b) comprenant au moins deux moyens de déplacement entraînés (22a ; 22b), en particulier des roues, et une unité de détection monoculaire (14a ; 14b), lesdits au moins deux moyens de déplacement (22a ; 22b) étant prévus pour faire tourner l'unité de détection (14a ; 14b) autour d'un axe de rotation (24a ; 24b) qui est agencé dans une position fixe par rapport à l'unité de détection (14a ; 14b), et l'unité de détection (14a ; 14b) et l'axe de rotation (24a ; 24b) étant agencés à distance l'un de l'autre, en particulier par un robot (10a ; 10b) selon l'une des revendications précédentes, **caractérisé en ce que**, dans au moins une étape (90a) du procédé, au moyen d'au moins une unité (18a ; 18b) de commande et/ou de régulation du robot (10a ; 10b), au moins un paramètre de conversion de distance est déterminé en fonction d'un mouvement de l'unité de détection (14a ; 14b) autour de l'axe de rotation (24a ; 24b) fixe pendant le mouvement, à une distance connue constante (60a ; 60b) par rapport à l'axe de rotation (24a ; 24b) et dans une orientation connue par rapport à l'axe de rotation (24a ; 24b) ; dans au moins une autre étape (92a) du procédé, la distance parcourue (26a ; 26b) par le robot (10a ; 10b) étant déterminée en fonction du paramètre de conversion de distance déterminé.

7. Procédé selon la revendication 6, **caractérisé en ce qu'**une détermination du paramètre de conversion de distance est réalisée au moyen de l'unité (18a ; 18b) de commande et/ou de régulation, en particulier par l'intermédiaire d'un algorithme (52a ; 52b), de manière continue ou périodique, à chaque intervalle de temps, une valeur déterminée du paramètre de conversion de distance en fonction d'un mouvement du robot (10a ; 10b), qui a lieu pendant l'intervalle de temps, étant soit utilisée pour déterminer la distance parcourue (26a ; 26b), soit ignorée.

8. Procédé selon la revendication 6 ou la revendication 7, **caractérisé en ce que**, dans au moins une étape (88a) du procédé, au moins un mouvement d'étalonnage du robot (10a ; 10b) est effectué au moyen de l'unité (18a ; 18b) de commande et/ou de régulation et d'une unité (12a ; 12b) de commande et/ou d'entraînement du robot (10a ; 10b) pour déterminer le paramètre de conversion de distance, au moins l'unité de détection (14a ; 14b) étant déplacée autour de l'axe de rotation (24a ; 24b), à une distance connue (60a ; 60b) de l'axe de rotation (24a ; 24b) et dans une orientation connue par rapport à l'axe de rotation (24a ; 24b).

9. Procédé selon l'une des revendications 6 à 8, **caractérisé en ce que**, dans au moins une étape (84a) du procédé, lors d'une détermination d'une distance (26a ; 26b) parcourue par le robot (10a ; 10b) au cours d'un intervalle de temps, au moyen de l'unité (18a ; 18b) de commande et/ou de régulation, au moins une grandeur caractéristique d'erreur de position du robot (10a ; 10b) est déterminée en fonction d'une erreur d'un paramètre de distance déterminé du robot (10a ; 10b), d'une erreur du paramètre de conversion de distance utilisé pour déterminer la distance parcourue (26a, 26b) et/ou d'une grandeur caractéristique d'erreur de position du robot (10a ; 10b) déterminée pour une distance parcourue (26a ; 26b) au cours d'un intervalle de temps précédent.

10. Procédé selon la revendication 9, **caractérisé en ce que**, dans au moins une étape (86a) du procédé, au moins un mouvement d'étalonnage du robot (10a ; 10b) est effectué au moyen de l'unité (18a ; 18b) de commande et/ou de régulation et de l'unité (12a ; 12b) de commande et/ou d'entraînement, pour, lorsqu'une valeur limite de la grandeur caractéristique d'erreur de position déterminée est dépassée, déterminer le paramètre de conversion de distance.

11. Procédé selon au moins une des revendications 8 et 10, **caractérisé en ce que**, dans au moins une étape du procédé (90a), le mouvement d'étalonnage du robot (10a ; 10b) pour déterminer le paramètre de conversion de distance est réalisé sous forme d'une rotation d'au moins l'unité de détection (14a ; 14b) autour de l'axe de rotation (24a ; 24b), un angle de rotation maximal (50a ; 50b) du mouvement d'étalonnage, en particulier de l'unité de détection (14a ; 14b) autour de l'axe de rotation (24a ; 24b), étant réglé au moyen de l'unité (18a ; 18b) de commande et/ou de régulation en fonction d'un paramètre d'évaluation d'image déterminé par rapport à une image acquise avant le mouvement d'étalonnage ou à un début de ce mouvement.

12. Procédé selon l'une des revendications 6 à 11, **caractérisé en ce que**, dans au moins une étape (94a) du procédé, une fréquence d'une détermination du paramètre de conversion de distance et/ou une fréquence d'un mouvement d'étalonnage du robot (10a ; 10b), exécuté par l'intermédiaire de l'unité (18a ; 18b) de commande et/ou de régulation , est/sont réglée(s) au moyen d'une unité externe (48a ; 48b) et/ou d'une unité de commande (40a ; 40b) du robot (10a ; 10b) pour la détermination du paramètre de conversion de distance.

13. Procédé selon l'une des revendications 6 à 12, **caractérisé en ce que**, dans au moins une étape (96a) du procédé, une fréquence d'une détermination du paramètre de conversion de distance et/ou une fréquence d'un mouvement d'étalonnage du robot (10a ; 10b), effectué au moyen de l'unité (18a ; 18b) de commande et/ou de régulation, , est/sont réglée(s) pour la détermination du paramètre de conversion de distance, au moyen de l'unité (18a ; 18b) de commande et/ou de régulation, en fonction d'au moins un paramètre environnemental détecté par une unité de détection (16a ; 16b) du robot (10a ; 10b).

14. Procédé selon l'une des revendications 6 à 13, **caractérisé en ce que**, dans au moins une étape (82a) du procédé, en particulier avant une mise en service du robot (10a ; 10b), au moins une position de l'unité de détection (14a ; 14b) par rapport à l'axe de rotation (24a ; 24b) est déterminée par un utilisateur, au moyen d'une unité externe (48a ; 48b) et/ou au moyen de l'unité (18a ; 18b) de commande et/ou de régulation, et est enregistrée dans une unité de mémoire de l'unité (18a ; 18b) de commande et/ou de régulation afin de déterminer le paramètre de conversion de distance.

# Fig. 1

# Fig. 2a

# Fig. 2b

Fig. 3a

**Fig. 3b**

# Fig. 3c

# Fig. 4

38a

82a

84a

86a

88a

90a

92a

94a

96a

# Fig. 5

# Fig. 6

**Fig. 7**

EP 4 208 764 B1

Fig. 8

EP 4 208 764 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- 1-Point-RANSAC Structure from Motion for Vehicle-Mounted Cameras by Exploiting Non-holonomic Constraints. **DAVIDE SCARAMUZZA**. INTERNATIONAL JOURNAL OF COMPUTER VISION. KLUWER ACADEMIC PUBLISHERS, 07 April 2011, vol. 95, 74-85